# EUROPEAN PATENT APPLICATION

(11) **EP 4 583 609 A1**
(43) Date of publication of application: **09.07.2025**
(21) Application number: 23870221.1
(22) Date of filing: 06.09.2023
(51) Int. Cl.: H04W 72/0453, H04W 74/08

(54) **COMMUNICATION METHOD AND DEVICE**

(30) Priority: 29.09.2022 CN 202211197975
(71) Applicant: Huawei Technologies Co., Ltd., Shenzhen, Guangdong 518129 (CN)
(72) Inventor: LI, Xiangyu, Shenzhen, Guangdong 518129 (CN); PENG, Wenjie, Shenzhen, Guangdong 518129 (CN)
(74) Representative: Thun, Clemens
(86) International application number: PCT/CN2023/117244
(87) International publication number: WO 2024/066982

(57) **Abstract**

This application provides a communication method and apparatus. A first terminal device performs LBT on any resource in all resources on a first unicast connection, and may determine, when consistent LBT failures occur on all the resources on the first unicast connection, that an RLF occurs on the first unicast connection. This increases a manner of determining that an RLF occurs on a unicast connection. In addition, the first terminal device does not continue to perform data transmission on the unicast connection, so that unreliable SL transmissions can be reduced, and quality of SL unicast communication is ensured.

## Description

This application claims priority to Chinese Patent Application No. 202211197975.9, filed with the China National Intellectual Property Administration on September 29, 2022 and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

Currently, a radio link failure (radio link failure, RLF) may occur on a unicast connection on a sidelink (sidelink, SL). Generally, a terminal device may determine, in the following manners, whether the RLF occurs on the unicast connection: determining whether a quantity of retransmissions of a radio link control (radio link control, RLC) entity included in the unicast connection reaches a maximum value; determining whether a T400 timer of the unicast connection expires; determining whether a medium access control (medium access control, MAC) entity of the terminal device indicates that a quantity of continuous hybrid automatic repeat request (hybrid automatic repeat request, HARQ) discontinuous transmissions (discontinuous transmissions, DTXs) of the unicast connection reaches a maximum value; and determining whether integrity check on a packet data convergence protocol (packet data convergence protocol, PDCP) entity of an SL signaling radio bearer (signaling radio bearer, SL-SRB2) or an SL-SRB3 of the unicast connection fails. However, because few application scenarios are covered when the foregoing manners are used to determine whether the RLF occurs on the unicast connection, the following case may occur: It is determined, by using the foregoing manners, that the RLF does not occur on the unicast connection, but actually the RLF occurs on the unicast connection. Consequently, quality of SL unicast communication cannot be ensured.

### SUMMARY

This application provides a communication method and apparatus, to increase a manner of determining that an RLF occurs on a unicast connection, reduce unreliable SL transmissions, and ensure quality of SL unicast communication.

According to a first aspect, a communication method is provided, and includes: A first terminal device performs listen before talk (listen before talk, LBT) on a first resource, where the first resource is any resource in all resources on a first unicast connection, and the first unicast connection is a unicast connection on a sidelink SL between the first terminal device and a second terminal device. When satisfying a first condition, the first terminal device determines that an RLF occurs on the first unicast connection, where the first condition includes that consistent LBT failures occur on all the resources on the first unicast connection. It can be learned that, the first terminal device performs LBT on any resource in all the resources on the first unicast connection, and may determine, when the consistent LBT failures occur on all the resources on the first unicast connection, that the RLF occurs on the first unicast connection. This increases a manner of determining that an RLF occurs on a unicast connection. In addition, the first terminal device does not continue to perform data transmission on the unicast connection, so that unreliable SL transmissions can be reduced, and quality of SL unicast communication is ensured.

Optionally, the first resource may include, for example, at least one of the following: a carrier, a bandwidth part, a resource pool, a resource block set, and a sub-channel. It should be understood that, one carrier may include one or more bandwidth parts, one bandwidth part may include one or more resource pools, one resource pool may include one or more resource block sets, one resource block set may include a sub-channel, and one sub-channel may include one or more physical resource blocks (physical resource blocks, PRBs).

Optionally, the first resource may be used for data transmission on a physical channel. The physical channel includes at least one of the following: a physical sidelink control channel (physical sidelink control channel, PSCCH), a physical sidelink shared channel (physical sidelink shared channel, PSSCH), a physical sidelink feedback channel (physical sidelink feedback channel, PSFCH), and a physical sidelink broadcast channel (physical sidelink broadcast channel, PSBCH). For example, the first resource may be, for example, a time domain resource and/or a frequency domain resource. The time domain resource may include, for example, at least one of the following: a frame, a subframe, a slot, a mini-slot, and a symbol. The frequency domain resource may include, for example, at least one of the following: a resource block group (resource block group, RBG), a resource block (resource block, RB), and a subcarrier.

It should be noted that all the resources on the first unicast connection may be understood as at least one of the following: all resources used for first unicast connection communication, and all resources that are on the first unicast connection and that are used by the first terminal device.

Optionally, with reference to the first aspect, that the first terminal device satisfies the first condition includes: If determining that the consistent LBT failures occur on the first resource, the first terminal device determines whether the consistent LBT failures occur on another resource on the first unicast connection other than the first resource. If the consistent LBT failures also occur on the another resource, the first terminal device determines that the RLF occurs on the first unicast connection. It can be learned that when determining that the consistent LBT failures occur on a resource, the first terminal device may determine whether the consistent LBT failures occur on another resource on the unicast connection other than the resource. If the consistent LBT failures also occur on the another resource, the first terminal device may determine that the RLF occurs on the unicast connection, so that the first terminal device does not continue to perform data transmission on the unicast connection. In this way, the unreliable SL transmissions may be reduced, and the quality of the SL unicast communication is ensured.

Optionally, with reference to the first aspect, all the resources on the first unicast connection are resources on an unlicensed spectrum. It can be learned that, because all the resources on the first unicast connection are resources on the unlicensed spectrum, and the RLF occurs on the first unicast connection, it indicates that the first terminal device cannot use a resource on the unlicensed spectrum to perform communication. In this way, the unreliable SL transmissions may be reduced, and the quality of the SL unicast communication is ensured.

Optionally, with reference to the first aspect, the method further includes: An access stratum of the first terminal device generates first indication information, where the first indication information indicates that the first terminal device experiences the consistent LBT failures on the first resource. The access stratum of the first terminal device sends the first indication information to an upper layer of the first terminal device. The upper layer of the first terminal device updates a correspondence between a first identifier and the first resource to a correspondence between the first identifier and a second resource based on the first indication information, and indicates the correspondence between the first identifier and the second resource to the access stratum of the first terminal device. Alternatively, the upper layer of the first terminal device switches, based on the first indication information, a first communication interface associated with the first resource to a second communication interface. It can be learned that the access stratum of the first terminal device may send the first indication information to the upper layer of the first terminal device. Because the first indication information indicates that the first terminal device experiences the consistent LBT failures on the first resource, the upper layer of the first terminal device may update the correspondence between the first identifier and the first resource to the correspondence between the first identifier and the second resource based on the first indication information, and indicate the correspondence between the first identifier and the second resource to the access stratum of the first terminal device. In this way, the access stratum of the first terminal device may learn of the correspondence between the first identifier and the new resource, and may perform communication by using the new resource associated with the first identifier, to reduce the unreliable SL transmissions and ensure the quality of the SL unicast communication. Alternatively, the upper layer of the first terminal device may switch, based on the first indication information, the first communication interface associated with the first resource to the second communication interface, so that the first terminal device can perform data transmission through the second communication interface, to reduce the unreliable SL transmissions and ensure the quality of the SL unicast communication.

In this application, the upper layer of the first terminal device is a vehicle to everything (vehicle to everything, V2X) layer, a proximity-based service communication interface 5 (ProSe communication 5 signal, PC5-S) layer, an application layer, or a proximity-based service (proximity services, ProSe) communication layer.

Optionally, the first identifier may be a layer-2 identifier (layer-2 identifier, L2 ID) of the first terminal device. The correspondence between the first identifier and the first resource may be understood as: The first identifier is in one-to-one correspondence with a first resource list, and the first resource list may include the first resource. The first resource list may further include a resource other than the first resource. Similarly, the correspondence between the first identifier and the second resource may be understood as: The first identifier is in one-to-one correspondence with a second resource list, and the second resource list may include the second resource. The second resource list may further include a resource other than the second resource. It should be noted that the first resource is different from the second resource.

Optionally, the second resource may include, for example, at least one of the following: a carrier, a bandwidth part, a resource pool, a resource block set, and a sub-channel.

Optionally, the second resource may be used for data transmission on a physical channel. The physical channel includes at least one of the following: a PSCCH, a PSSCH, a PSFCH, and a PSBCH. For example, the second resource may be, for example, a time domain resource and/or a frequency domain resource.

In this application, the first communication interface may be, for example, a proximity-based service communication 5 (ProSe communication 5, PC5) interface, and the second communication interface may be, for example, an interface between the first terminal device and a network device, where the interface between the first terminal device and the network device may be referred to as a Uu interface.

Optionally, with reference to the first aspect, that the access stratum of the first terminal device sends the first indication information to an upper layer of the first terminal device includes: If the consistent LBT failures occur on all the resources for the first terminal device on the unlicensed spectrum, the access stratum of the first terminal device sends the first indication information to the upper layer of the first terminal device. It can be learned that when the consistent LBT failures occur on all the resources for the first terminal device on the unlicensed spectrum, the access stratum of the first terminal device may send the first indication information to the upper layer of the first terminal device, so that the upper layer of the first terminal device may learn of a status of using the resource on the unlicensed spectrum to perform communication.

Optionally, with reference to the first aspect, the first indication information further indicates that the first terminal device cannot use the resource on the unlicensed spectrum to perform communication. In this way, the upper layer of the first terminal device may learn that the first terminal device cannot use the resource on the unlicensed spectrum to perform communication.

According to a second aspect, a communication method is provided, and includes: A first terminal device performs LBT on a first resource, where the first resource is used by the first terminal device to perform SL communication with a second terminal device. The first terminal device determines, when consistent LBT failures occur on the first resource, that an RLF occurs on the first resource. It can be learned that the first terminal device performs LBT on the first resource used by the first terminal device to perform SL communication with the second terminal device, so that when the consistent LBT failures occur on the first resource, the first terminal device can determine that the RLF occurs on the first resource. This implements RLF determining at a resource granularity. In addition, the first terminal device does not continue to perform data transmission on the first resource, so that unreliable SL transmissions can be reduced, and quality of SL unicast communication is ensured.

Optionally, with reference to the second aspect, after determining that the radio link failure RLF occurs on the first resource, the method further includes: The first terminal device releases a first bearer associated with the first resource, where the first bearer includes at least one of the following: an SL data radio bearer (data radio bearer, DRB), an SL SRB, and an SL radio link control (radio link control, RLC) bearer. It can be learned that the first terminal device may release the first bearer associated with the first resource, so that the first terminal device does not need to continue to maintain the first bearer. In this way, energy consumption is reduced, and implementation complexity may also be reduced.

It should be understood that the first bearer may be, for example, a bearer between the first terminal device and the second terminal device. Specifically, the SL DRB may be, for example, an SL DRB between the first terminal device and the second terminal device. The SL SRB may be, for example, an SL SRB between the first terminal device and the second terminal device. The SL RLC bearer may be, for example, an SL RLC bearer between the first terminal device and the second terminal device.

It should be noted that a sidelink radio bearer (sidelink Radio Bearer, SL RB) is a general term of a series of protocol entities and configurations allocated by a network device to a terminal device, is a service provided by a layer-2 for transmitting user data between terminal devices, and includes a series of configurations such as a packet data convergence protocol (packet data convergence protocol, PDCP) layer entity. The SL RB may include an SL DRB and an SL SRB. The SL DRB is used to carry data, and the SL SRB is used to carry a signaling message. The SL RLC bearer is a protocol entity below an RLC layer and a configuration of the protocol entity, is a lower-layer part of the SL RB, and includes a series of configurations such as an RLC layer entity and a logical channel.

Optionally, with reference to the second aspect, after determining that the radio link failure RLF occurs on the first resource, the method further includes: The first terminal device discards SL configuration information associated with the first resource. It can be learned that because the first terminal device discards the SL configuration information associated with the first resource, storage space may be saved. In addition, the first terminal device does not need to continue to maintain the SL configuration information, so that the energy consumption is reduced.

The SL configuration information may include, for example, at least one of the following: configuration information of the first resource and configuration information of the first bearer.

Optionally, that the first terminal device discards SL configuration information associated with the first resource may be understood as: The first terminal device deletes the SL configuration information associated with the first resource.

Optionally, with reference to the second aspect, after determining that the radio link failure RLF occurs on the first resource, the method further includes: The first terminal device resets a medium access control (medium access control, MAC) layer entity corresponding to the first resource. It can be learned that, because the first terminal device resets the MAC layer entity corresponding to the first resource, a buffer (for example, a soft buffer) may be cleared, so that storage space can be saved.

In this application, the first terminal device resets the MAC layer entity corresponding to the first resource. The MAC entity of the first terminal device may perform at least one of the following: canceling a triggered scheduling request (scheduling request, SR) associated with a radio resource control (radio resource control, RRC) connection; canceling a triggered SL buffer status report (buffer status report, BSR) associated with the RRC connection; and clearing a buffer (for example, a soft buffer) of an SL process associated with the RRC connection.

Optionally, with reference to the second aspect, after determining that the radio link failure RLF occurs on the first resource, the method further includes: The first terminal device sends first indication information to the network device, where the first indication information indicates that the RLF occurs on the first resource. In this way, the network device may learn that the RLF occurs on the first resource.

According to a third aspect, a communication method is provided, and includes: An access stratum of a first terminal device generates first indication information, where the first indication information indicates that the first terminal device experiences consistent LBT failures on a first resource. The access stratum of the first terminal device sends the first indication information to an upper layer of the first terminal device. The upper layer of the first terminal device updates a correspondence between a first identifier and the first resource to a correspondence between the first identifier and a second resource based on the first indication information, and indicates the correspondence between the first identifier and the second resource to the access stratum of the first terminal device. Alternatively, the upper layer of the first terminal device switches, based on the first indication information, a first communication interface associated with the first resource to a second communication interface. In this way, the access stratum of the first terminal device may learn of the correspondence between the first identifier and the new resource, and may perform communication by using the new resource associated with the first identifier, to reduce unreliable SL transmissions and ensure quality of SL unicast communication. Alternatively, the first terminal device may perform data transmission through the second communication interface, to reduce unreliable SL transmissions and ensure quality of SL unicast communication.

Optionally, with reference to the third aspect, that the access stratum of the first terminal device sends the first indication information to an upper layer of the first terminal device includes: If the consistent LBT failures occur on all the resources for the first terminal device on an unlicensed spectrum, the access stratum of the first terminal device sends the first indication information to the upper layer of the first terminal device. In this way, the upper layer of the first terminal device may learn of a status of using a resource on the unlicensed spectrum to perform communication.

Optionally, with reference to the third aspect, the first indication information further indicates that the first terminal device cannot use the resource on the unlicensed spectrum to perform communication. In this way, the upper layer of the first terminal device may learn that the first terminal device cannot use the resource on the unlicensed spectrum to perform communication.

According to a fourth aspect, a communication method is provided, and includes: A first terminal device generates first indication information, where the first indication information indicates that the first terminal device experiences consistent LBT failures. The first terminal device sends a first message to a second terminal device, where the first message includes the first indication information, and the first message is a unicast message, a multicast message, or a broadcast message. It can be learned that the first terminal device may send the first message to the second terminal device. Because the first message includes the first indication information, and the first indication information indicates that the first terminal device experiences the consistent LBT failures, the second terminal device may learn that the first terminal device experiences the consistent LBT failures. The first indication information may further assist the second terminal device in performing SL communication. In addition, the first message may be a unicast message, a multicast message, or a broadcast message, so that the first message is sent in different manners.

Optionally, with reference to the fourth aspect, the first message is a unicast message, and a resource on a unicast connection between the first terminal device and the second terminal device is a resource on an unlicensed spectrum. This may also be understood as: When communication on the unicast connection between the first terminal device and the second terminal device is performed by using a resource on the unlicensed spectrum, the first terminal device sends the first indication information to the second terminal device by using a unicast message. This may reduce use of an inappropriate resource on the unlicensed spectrum by the second terminal device for communication.

Optionally, with reference to the fourth aspect, the first message is a multicast message or a broadcast message, the first message is carried in a first transport block, and the first transport block includes a destination layer-2 identifier. The destination layer-2 identifier indicates that the first transport block carries the first message. Alternatively, the destination layer-2 identifier indicates a service type of a multicast service, and the first message and the multicast service are multiplexed in the first transport block. Alternatively, the destination layer-2 identifier indicates a service type of a broadcast service, and the first message and the broadcast service are multiplexed in the first transport block. It can be learned that, because the destination layer-2 identifier indicates that the first transport block carries the first message, when the second terminal device is interested in the first message, the second terminal device may receive the first message, and then learn that the first terminal device experiences the consistent LBT failures. Similarly, because the destination layer-2 identifier indicates the service type of the multicast service or the service type of the broadcast service, and the first message and the multicast service are multiplexed in the first transport block, or the first message and the broadcast service are multiplexed in the first transport block, when the second terminal device is interested in the service type, the second terminal device may learn, by obtaining the first transport block, that the first terminal device experiences the consistent LBT failures.

It should be understood that in this application, in a case in which the destination layer-2 identifier indicates that the first transport block carries the first message, the destination layer-2 identifier may be, for example, a dedicated identifier, an identifier predefined in a protocol, or a preconfigured identifier. This is not limited herein.

Optionally, that the destination layer-2 identifier indicates a service type of a multicast service may be understood as: The destination layer-2 identifier indicates one terminal device group, where one terminal device group includes one or more terminal devices that perform SL multicast communication.

There may be one or more service types of multicast services or broadcast services. This is not limited herein.

Optionally, with reference to the fourth aspect, the method further includes: The first terminal device receives second indication information from the second terminal device, where the second indication information is used to allow the first terminal device to send, to the second terminal device, indication information indicating that the first terminal device experiences the consistent LBT failures. It can be learned that, because the second indication information is used to allow the first terminal device to send, to the second terminal device, the indication information indicating that the first terminal device experiences the consistent LBT failures, the first terminal device may send, to the second terminal device when the first terminal device experiences the consistent LBT failures, the indication information indicating that the first terminal device experiences the consistent LBT failures.

Optionally, with reference to the fourth aspect, that the second indication information is used to allow the first terminal device to send, to the second terminal device, indication information indicating that the first terminal device experiences the consistent LBT failures includes: The second indication information is used to allow the first terminal device to send, to the second terminal device in a case in which the consistent LBT failures occur on a first resource, the indication information indicating that the first terminal device experiences the consistent LBT failures. It can be learned that, because the second indication information is used to allow the first terminal device to send, to the second terminal device in the case in which the consistent LBT failures occur on the first resource, the indication information indicating that the first terminal device experiences the consistent LBT failures, the first terminal device may send, to the second terminal device when the first terminal device experiences the consistent LBT failures on the first resource, the indication information indicating that the first terminal device experiences the consistent LBT failures.

That the second indication information is used to allow the first terminal device to send, to the second terminal device in a case in which the consistent LBT failures occur on a first resource, the indication information indicating that the first terminal device experiences the consistent LBT failures may be understood as: The second indication information is used to allow the first terminal device to send, to the second terminal device when the consistent LBT failures occur on the first resource, the indication information indicating that the first terminal device experiences the consistent LBT failures. In other words, when the first terminal device experiences the consistent LBT failures on the first resource, the first terminal device is immediately triggered to send, to the second terminal device, the indication information indicating that the first terminal device experiences the consistent LBT failures. Alternatively, that the second indication information is used to allow the first terminal device to send, to the second terminal device in a case in which the consistent LBT failures occur on a first resource, the indication information indicating that the first terminal device experiences the consistent LBT failures may be understood as: The second indication information is used to allow the first terminal device to send, to the second terminal device after the consistent LBT failures occur on the first resource, the indication information indicating that the first terminal device experiences the consistent LBT failures. In other words, when the first terminal device experiences the consistent LBT failures on the first resource, the first terminal device may wait for a period of time and then send, to the second terminal device, the indication information indicating that the first terminal device experiences the consistent LBT failures.

It should be understood that, in a possible implementation, the second indication information is further used to allow the first terminal device to send, to the second terminal device in a case in which the consistent LBT failures occur on a resource other than the first resource, the indication information indicating that the first terminal device experiences the consistent LBT failures.

Optionally, with reference to the fourth aspect, that the first indication information indicates that the first terminal device experiences consistent LBT failures includes: The first indication information indicates that the first terminal device experiences the consistent LBT failures on a second resource. In a possible implementation, the first resource is the same as the second resource. It can be learned that, in this way, the second terminal device may learn that the first terminal device experiences the consistent LBT failures on the second resource.

According to a fifth aspect, a communication method is provided, and includes: A second terminal device receives a first message from a first terminal device, where the first message includes first indication information, the first message is a unicast message, a multicast message, or a broadcast message, and the first indication information indicates that the first terminal device experiences consistent LBT failures. The second terminal device performs resource re-selection based on the first indication information to determine a third resource. Alternatively, the second terminal device sends the first indication information to a network device, and receives a third resource from the network device. The third resource is used by the second terminal device to perform SL communication. It can be learned that the first terminal device may send the first message to the second terminal device. Because the first message includes the first indication information, and the first indication information indicates that the first terminal device experiences the consistent LBT failures, the second terminal device may learn that the first terminal device experiences the consistent LBT failures. Then, the second terminal device may perform resource re-selection to determine the third resource or receive the third resource from the network device. This avoids a problem of poor communication quality caused because the second terminal device uses a second resource to perform SL communication.

The third resource may include, for example, at least one of the following: a carrier, a bandwidth part, a resource pool, a resource block set, and a sub-channel.

Optionally, the third resource may be used for data transmission on a physical channel. The physical channel includes at least one of the following: a PSCCH, a PSSCH, a PSFCH, and a PSBCH. For example, the third resource may be, for example, a time domain resource and/or a frequency domain resource.

That the third resource is used by the second terminal device to perform SL communication may be understood as at least one of the following: The third resource is used by the second terminal device to perform SL communication with the first terminal device; and the third resource is used by the second terminal device to perform SL communication with a terminal device other than the first terminal device.

Optionally, with reference to the fifth aspect, the first message is a unicast message, and a resource on a unicast connection between the first terminal device and the second terminal device is a resource on an unlicensed spectrum. This may reduce use of an inappropriate resource on the unlicensed spectrum by the second terminal device for communication.

Optionally, with reference to the fifth aspect, the first message is a multicast message or a broadcast message, the first message is carried in a first transport block, and the first transport block includes a destination layer-2 identifier. The destination layer-2 identifier indicates that the first transport block carries the first message. Alternatively, the destination layer-2 identifier indicates a service type of a multicast service, and the first message and the multicast service are multiplexed in the first transport block. Alternatively, the destination layer-2 identifier indicates a service type of a broadcast service, and the first message and the broadcast service are multiplexed in the first transport block. It can be learned that, because the destination layer-2 identifier indicates that the first transport block carries the first message, when the second terminal device is interested in the first message, the second terminal device may receive the first message, and then learn that the first terminal device experiences the consistent LBT failures. Similarly, because the destination layer-2 identifier indicates the service type of the multicast service or the service type of the broadcast service, and the first message and the multicast service are multiplexed in the first transport block, or the first message and the broadcast service are multiplexed in the first transport block, when the second terminal device is interested in the service type, the second terminal device may learn, by obtaining the first transport block, that the first terminal device experiences the consistent LBT failures.

Optionally, with reference to the fifth aspect, before the second terminal device receives the first message from the first terminal device, the method further includes: The second terminal device sends second indication information to the first terminal device, where the second indication information is used to allow the first terminal device to send, to the second terminal device, indication information indicating that the first terminal device experiences the consistent LBT failures. It can be learned that, because the second indication information is used to allow the first terminal device to send, to the second terminal device, the indication information indicating that the first terminal device experiences the consistent LBT failures, the first terminal device may send, to the second terminal device when the first terminal device experiences the consistent LBT failures, the indication information indicating that the first terminal device experiences the consistent LBT failures.

Optionally, with reference to the fifth aspect, that the second indication information is used to allow the first terminal device to send, to the second terminal device, indication information indicating that the first terminal device experiences the consistent LBT failures includes: The second indication information is used to allow the first terminal device to send, to the second terminal device in a case in which the consistent LBT failures occur on a first resource, the indication information indicating that the first terminal device experiences the consistent LBT failures. It can be learned that, because the second indication information is used to allow the first terminal device to send, to the second terminal device in the case in which the consistent LBT failures occur on the first resource, the indication information indicating that the first terminal device experiences the consistent LBT failures, the first terminal device may send, to the second terminal device when the first terminal device experiences the consistent LBT failures on the first resource, the indication information indicating that the first terminal device experiences the consistent LBT failures.

Optionally, with reference to the fifth aspect, that the first indication information indicates that the first terminal device experiences consistent LBT failures includes: The first indication information indicates that the first terminal device experiences the consistent LBT failures on the second resource. It can be learned that, in this way, the second terminal device may learn that the first terminal device experiences the consistent LBT failures on the second resource.

It should be noted that the third resource is different from the second resource.

Optionally, with reference to the fifth aspect, the method further includes: A MAC layer or an RLC layer of the second terminal device indicates, to a physical (physical, PHY) layer of the second terminal device, that the first terminal device experiences the consistent LBT failures on the second resource. It can be learned that, because the MAC layer or the RLC layer of the second terminal device indicates, to the PHY layer of the second terminal device, that the first terminal device experiences the consistent LBT failures on the second resource, the PHY layer of the second terminal device may be triggered to perform resource re-selection.

Optionally, with reference to the fifth aspect, that the second terminal device performs resource re-selection based on the first indication information to determine a third resource includes: If there is data to be sent to the first terminal device, the second terminal device performs resource re-selection based on the first indication information to determine the third resource. It can be learned that when there is data to be sent to the first terminal device, the second terminal device performs resource re-selection based on the first indication information to determine the third resource. Then, the second terminal device may perform reliable transmission with the first terminal device on the third resource. This ensures communication quality.

Optionally, with reference to the fifth aspect, the method further includes: The second terminal device selects an SL destination address (destination) based on the first indication information. In this way, when selecting the SL destination, the second terminal device may select a more reliable SL destination. This ensures the communication quality.

Optionally, with reference to the fifth aspect, if an SL grant overlaps the second resource, the SL destination does not include a destination corresponding to the first terminal device. It can be learned that when the SL grant overlaps the second resource, the SL destination does not include the destination corresponding to the first terminal device. In other words, the second terminal device does not use the second resource to communicate with the first terminal device. This may reduce the use of the inappropriate resource on the unlicensed spectrum by the second terminal device for communication with the first terminal device.

The SL grant may be a resource configured by the network device for the second terminal device, or may be a resource that is on the unlicensed spectrum and that is determined by the second terminal device. For example, the SL grant is a resource that is on the unlicensed spectrum and that is obtained by the second terminal device through listening and/or LBT.

It should be noted that, that an SL grant overlaps the second resource may be understood as one of the following: The SL grant partially overlaps the second resource; and the SL grant completely overlaps the second resource.

According to a sixth aspect, a communication method is provided, and includes: A network device receives first indication information from a second terminal device, where the first indication information indicates that a first terminal device experiences consistent LBT failures. The network device determines a third resource for the second terminal device based on the first indication information. The network device sends the third resource to the second terminal device. It can be learned that the network device may receive the first indication information from the second terminal device, determine the third resource for the second terminal device based on the first indication information, and send the third resource to the second terminal device. This avoids a problem of poor communication quality caused because the second terminal device uses a second resource to perform SL communication.

Optionally, with reference to the sixth aspect, that the first indication information indicates that a first terminal device experiences consistent LBT failures includes: The first indication information indicates that the first terminal device experiences the consistent LBT failures on the second resource. It can be learned that, in this way, the network device may learn that the first terminal device experiences the consistent LBT failures on the second resource.

According to a seventh aspect, a communication apparatus is provided. The communication apparatus includes a module configured to perform the method according to any one of the first aspect, the second aspect, the third aspect, the fourth aspect, the fifth aspect, or the sixth aspect.

According to an eighth aspect, a communication apparatus is provided, and includes a processor. The processor is coupled to a memory, and the memory stores a computer program. The processor is configured to invoke the computer program in the memory, so that the communication apparatus performs the method according to any one of the first aspect, the second aspect, the third aspect, the fourth aspect, the fifth aspect, or the sixth aspect.

In a possible design, the communication apparatus may be a chip or a device including the chip that implements the method in the first aspect, the second aspect, the third aspect, the fourth aspect, the fifth aspect, or the sixth aspect.

According to a ninth aspect, a communication apparatus is provided, and includes a processor and an interface circuit. The interface circuit is configured to receive a signal from a communication apparatus other than the communication apparatus and transmit the signal to the processor, or send a signal from the processor to a communication apparatus other than the communication apparatus. The processor is configured to implement the method according to any one of the first aspect, the second aspect, the third aspect, the fourth aspect, the fifth aspect, or the sixth aspect through a logic circuit or by executing code instructions.

According to a tenth aspect, a computer-readable storage medium is provided, where the storage medium stores a computer program or instructions. When the computer program or the instructions are executed by a computer, the method according to any one of the first aspect, the second aspect, the third aspect, the fourth aspect, the fifth aspect, or the sixth aspect is implemented.

According to an eleventh aspect, a computer program product is provided. When a computer reads and executes the computer program product, the computer is enabled to perform the method according to any one of the first aspect, the second aspect, the third aspect, the fourth aspect, the fifth aspect, or the sixth aspect.

According to a twelfth aspect, a communication system is provided. In a possible implementation, the communication system includes a first terminal device that performs the method according to any one of the first aspect, the second aspect, or the third aspect. In another possible implementation, the communication system includes at least one of the following: a first terminal device that performs the method according to any one of the fourth aspect, a second terminal device that performs the method according to any one of the fifth aspect, and a network device that performs the method according to any one of the sixth aspect.

### BRIEF DESCRIPTION OF DRAWINGS

The following briefly describes accompanying drawings used for describing embodiments.
FIG. 1 shows a basic architecture of a communication system according to an embodiment of this application;
FIG. 2 is a diagram of a hardware structure of a communication apparatus that may be used for an embodiment of this application;
FIG. 3 is a schematic flowchart of a communication method according to an embodiment of this application;
FIG. 4 is a schematic flowchart of another communication method according to an embodiment of this application;
FIG. 5 is a schematic flowchart of another communication method according to an embodiment of this application;
FIG. 6 is a schematic flowchart of another communication method according to an embodiment of this application;
FIG. 7 is a diagram of a structure of a communication apparatus according to an embodiment of this application;
FIG. 8 is a diagram of a structure of a simplified terminal device according to an embodiment of this application; and
FIG. 9 is a diagram of a structure of a simplified network device according to an embodiment of this application.

### DESCRIPTION OF EMBODIMENTS

The following describes the technical solutions in embodiments of this application with reference to the accompanying drawings in embodiments of this application. The terms "system" and "network" may be used interchangeably in embodiments of this application. "/" represents an "or" relationship between associated objects unless otherwise specified. For example, A/B may represent A or B. The term "and/or" in this application is merely an association relationship for describing associated objects, and represents that three relationships may exist. For example, A and/or B may represent the following three cases: Only A exists, both A and B exist, and only B exists, where A and B each may be singular or plural. In addition, in the descriptions of this application, "a plurality of" means two or more than two unless otherwise specified. "At least one of the following items (pieces)" or a similar expression thereof means any combination of these items, including any combination of singular items (pieces) or plural items (pieces). For example, at least one of a, b, or c may represent a, b, c, a and b, a and c, b and c, or a, b, and c, where a, b, and c may be singular or plural. In addition, to clearly describe the technical solutions in embodiments of this application, the terms such as "first" and "second" are used in embodiment of this application to distinguish between same items or similar items that provide basically same network elements or purposes. A person skilled in the art may understand that the terms such as "first" and "second" do not limit a quantity or an execution sequence, and the terms such as "first" and "second" do not indicate a definite difference.

Reference to "an embodiment", "some embodiments", or the like described in embodiments of this application indicates that one or more embodiments of this application include a specific feature, structure, or characteristic described with reference to embodiments. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "have", and their variants all mean "include but are not limited to", unless otherwise specifically emphasized in another manner.

The objectives, technical solutions, and beneficial effects of this application are further described in detail in the following specific implementations. It should be understood that the following descriptions are merely specific implementations of this application, but are not intended to limit the protection scope of this application. Any modification, equivalent replacement, or improvement made based on technical solutions of this application shall fall within the protection scope of this application.

In embodiments of this application, unless otherwise stated or if there is a logic conflict, terms and/or descriptions in different embodiments are consistent and may be mutually referenced, and technical features in different embodiments may be combined into a new embodiment based on an internal logical relationship thereof.

The following describes some nouns used in this application.

### 1. SL

The SL is defined for direct communication between terminal devices. To be specific, the SL is a link on which the terminal devices directly communicate with each other without forwarding by a base station. An interface between the terminal devices may be referred to as a PC5 interface.

A communication type supported by the SL may include broadcast communication, multicast communication, and unicast communication. In an LTE system, the broadcast communication is supported by the SL. In a new radio (NR) system, the broadcast communication, the multicast communication, and the unicast communication are supported by the SL.

The broadcast communication is similar to broadcasting system information by a network device. To be specific, a terminal device sends a broadcast service to the outside without encryption. Any other terminal device within an effective reception scope may receive the broadcast service if the terminal device is interested in the broadcast service.

The multicast communication is communication between all terminals in a communication group, and any terminal device in the group can send/receive a multicast service.

The unicast communication is similar to data communication performed after a radio resource control (radio resource control, RRC) connection is established between a terminal device and a network device, and a unicast connection needs to be first established between two terminal devices. After the unicast connection is established, the two terminal devices may perform data communication based on a negotiated identifier, and the data may be encrypted or may not be encrypted. In comparison with broadcast, in the unicast communication, the unicast communication can be performed only between the two terminal devices that have established the unicast connection.

### 2. LBT

For a resource on an unlicensed spectrum, a terminal device and a network device need to perform LBT. This application describes only LBT performed by the terminal device. LBT may also be referred to as a channel access procedure. For ease of description, the channel access procedure is collectively referred to as LBT below.

Generally, LBT is performed at a channel granularity (for example, 20 MHz), and a channel may be understood as a resource block set (resource block set). In other words, frequency domain of one channel and one resource block set are both 20 MHz. Before sending a signal (for example, a data signal) on a channel (for example, denoted as a first channel), the terminal device may first detect whether the first channel is idle. This process may be referred to as clear channel assessment (clear channel assessment, CCA).

Specifically, there are two types of LBT, denoted as type 1 LBT and type 2 LBT.

The type 1 (type 1) LBT (which may also be referred to as LBT based on fixed duration) may be energy detection based on fixed duration. For a specific bandwidth, for example, 20 MHz, if signal energy received by the terminal device within fixed duration is less than or equal to a first preset threshold, it is considered that the channel is idle, and the terminal device may perform data transmission through the idle channel. If signal energy received by the terminal device within fixed duration is greater than a first preset threshold, it is considered that the channel is busy, and the terminal device does not perform data transmission through the busy channel.

The type 2 (type 2) LBT (which may also be referred to as rollback-based LBT) may be energy detection based on a rollback mechanism. For a specific bandwidth, a window is defined. A range of a quantity of detected slots is defined in the window. After the terminal device detects at least A idle energy detection slots by randomly selecting a value A from the window (or a value range), it is considered that the channel is idle, and the terminal device may perform data transmission through the idle channel; otherwise, it is considered that the channel is busy, and the terminal device does not perform data transmission through the busy channel. Idle energy detection means that signal energy received within fixed duration is less than or equal to a second preset threshold.

The first preset threshold and the second preset threshold may be predefined, for example, predefined in a protocol. This is not limited herein. In addition, there is no limitation relationship between the first preset threshold and the second preset threshold, and the first preset threshold and the second preset threshold may be the same or may be different.

Two results may be obtained when LBT is performed: an LBT success and an LBT failure. There are a plurality of time domain start positions in a time-frequency resource used for data transmission. If it is determined, before any time domain start position, that a channel is idle, it is considered that LBT succeeds. If it is determined, before all the time domain start positions, that the channel is busy, it is considered that LBT fails.

In an unlicensed spectrum communication scenario, the terminal device can perform communication by using the resource on the unlicensed spectrum only when LBT succeeds. When LBT fails, the terminal device cannot perform communication by using the resource on the unlicensed spectrum.

Generally, a physical (physical, PHY) layer of the terminal device may perform LBT on an active bandwidth part (bandwidth part, BWP). Each time an LBT failure occurs, the PHY layer of the terminal device may send LBT failure indication information to a MAC layer of the terminal device. The MAC layer of the terminal device may perform the following operations: 1. Add 1 to a count value of an LBT failure counter (LBT_FAIL_COUNTER), where an initial value of the counter is 0. 2. Start or restart a timer (the timer may be lbtFailureDetectionTimer defined in a 3GPP standard), where duration of the timer may be duration configured by the network device.

Before the timer expires, if the count value of the LBT failure counter reaches a preset threshold, the terminal device may determine that consistent LBT failures (consistent LBT failures) occur on the active BWP. When the timer expires, the terminal device may reset the count value of the counter to 0. The preset threshold and the duration of the timer may be configured by a radio resource control (radio resource control, RRC) layer of the terminal device for the MAC layer of the terminal device, and the preset threshold and the duration of the timer may be included in consistent LBT failure recovery configuration information.

The foregoing content briefly describes meanings of some terms in embodiments of this application. To better understand the technical solutions provided in embodiments of this application, the foregoing content does not constitute a limitation on the technical solutions provided in embodiments of this application.

It should be understood that the technical solutions in embodiments of this application are applicable to a long term evolution (long term evolution, LTE) architecture, a fifth generation mobile communication technology (5th generation mobile network, 5G), a wireless local area network (wireless local area network, WLAN) system, a V2X communication system, and the like. The technical solutions in embodiments of this application are further applicable to another future communication system, for example, a 6G communication system. In the future communication system, a same function may be maintained, but a name may be changed.

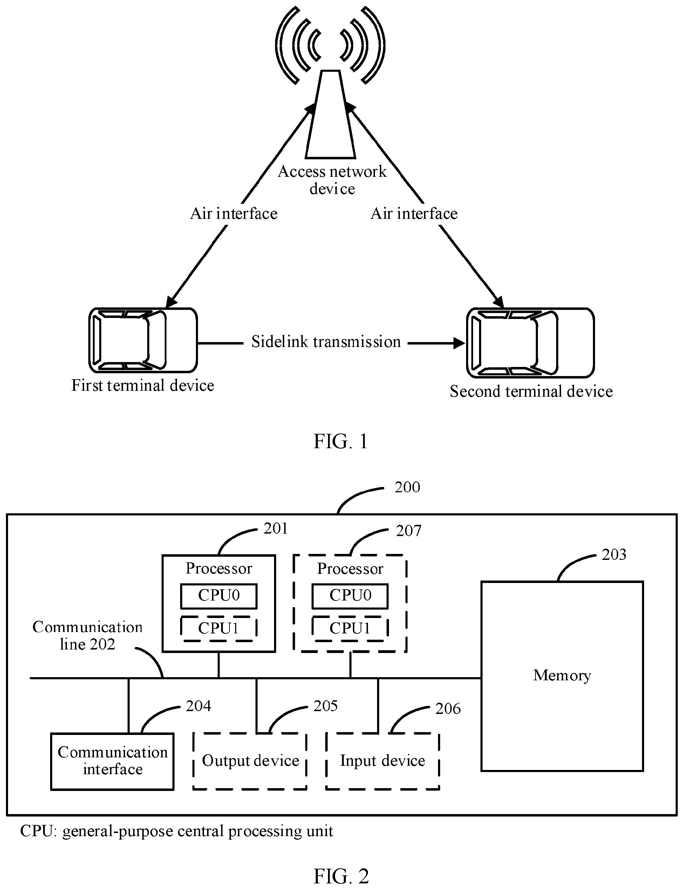

The following describes a basic architecture of a communication system provided in embodiments of this application. FIG. 1 shows a basic architecture of a communication system according to an embodiment of this application. As shown in FIG. 1, the communication system may include a first terminal device and a second terminal device that performs SL communication with the first terminal device. FIG. 1 is merely a diagram, and does not constitute a limitation on a scenario to which the technical solutions provided in this application are applicable.

It should be understood that the first terminal device may further perform SL communication with a terminal device other than the second terminal device, and the second terminal device may further perform SL communication with a terminal device other than the first terminal device. This is not limited herein.

Optionally, in this application, the first terminal device may perform communication with the second terminal device via a relay terminal.

The first terminal device, the second terminal device, and the relay terminal are entities on a user side that are configured to receive a signal, send a signal, or receive a signal and send a signal. The first terminal device, the second terminal device, and the relay terminal may be configured to provide one or more of a voice service and a data connectivity service for a user. The first terminal device, the second terminal device, and the relay terminal may be devices that include a wireless transceiver function and that can cooperate with a network device to provide a communication service for a user. Specifically, the first terminal device, the second terminal device, and the relay terminal may be user equipment (user equipment, UE), access terminals, subscriber units, subscriber stations, mobile stations, remote stations, remote terminals, mobile devices, terminals, wireless communication devices, user agents, user apparatuses, or roadside units (roadside units, RSUs). The first terminal device, the second terminal device, and the relay terminal may alternatively be uncrewed aerial vehicles, internet of things (internet of things, IoT) devices, stations (stations, STs) in a WLAN, cellular phones (cellular phones), smartphones (smartphones), cordless phones, wireless data cards, tablet computers, session initiation protocol (session initiation protocol, SIP) phones, wireless local loop (wireless local loop, WLL) stations, personal digital assistant (personal digital assistant, PDA) devices, laptop computers (laptop computers), machine-type communication (machine-type communication, MTC) terminals, handheld devices having a wireless communication function, computing devices or other processing devices connected to a wireless modem, vehicle-mounted devices, wearable devices (also referred to as wearable intelligent devices), virtual reality (virtual reality, VR) terminals, augmented reality (augmented reality, AR) terminals, wireless terminals in industrial control (industrial control), wireless terminals in self driving (self driving), wireless terminals in telemedicine (remote medical), wireless terminals in a smart grid (smart grid), wireless terminals in transportation safety (transportation safety), wireless terminals in a smart city (smart city), wireless terminals in a smart home (smart home), or the like. The first terminal device, the second terminal device, and the relay terminal may alternatively be device to device (device to device, D2D) devices, for example, electricity meters or water meters. The first terminal device, the second terminal device, and the relay terminal may alternatively be terminals in a 5G system, or terminals in a next-generation communication system. This is not limited in this embodiment of this application.

The communication system may further include one or more network devices (only one is shown). In this application, the first terminal device and the second terminal device may be located within coverage of a same network device. Alternatively, the first terminal device and the second terminal device may be located within coverage of different network devices. Alternatively, the first terminal device is located within coverage of a network device, and the second terminal device is located out of coverage (out of coverage) of the network device. Alternatively, the first terminal device is located out of coverage of a network device, and the second terminal device is located within coverage of the network device. Alternatively, both the first terminal device and the second terminal device are located out of coverage of a network device. This is not limited herein.

Optionally, in this application, the first terminal device or the second terminal device may perform communication with the network device via the relay terminal.

The network device is an entity that is on a network side and that is configured to send a signal, or receive a signal, or send a signal and receive a signal. The network device may be an apparatus that is deployed in a radio access network (radio access network, RAN) and that provides a wireless communication function for the first terminal device and the second terminal device, for example, may be a transmission reception point (transmission reception point, TRP), a base station, or a control node in various forms, for example, a network controller, a radio controller, or a radio controller in a cloud radio access network (cloud radio access network, CRAN) scenario. Specifically, the network device may be a macro base station, a micro base station (also referred to as a small cell), a relay station, an access point (access point, AP), a radio network controller (radio network controller, RNC), a NodeB (NodeB, NB), a base station controller (base station controller, BSC), a base transceiver station (base transceiver station, BTS), a home base station (for example, a home evolved NodeB, or a home NodeB, HNB), a baseband unit (baseband unit, BBU), a transmission point (transmitting and receiving point, TRP), a transmitting point (transmitting point, TP), a mobile switching center, and the like in various forms, or may be an antenna panel of the base station. The control node may be connected to a plurality of base stations, and configure resources for a plurality of terminals covered by the plurality of base stations. In systems using different radio access technologies, names of devices having a base station function may be different. For example, the network device may be an evolved NodeB (evolved NodeB, eNB or eNodeB) in an LTE system, may be a radio controller in a cloud radio access network (cloud radio access network, CRAN) scenario, or may be a gNB in 5G. Alternatively, the network device may be a relay station, an access point, a vehicle-mounted device, a wearable device, a network side device in a network after 5G, a network device in a future evolved PLMN network, or the like. A specific name of the network device is not limited in this application.

It should be noted that the technical solutions provided in this embodiment of this application are applicable to a plurality of system architectures. The network architecture and the service scenario described in embodiments of this application are intended to describe the technical solutions in embodiments of this application more clearly, and do not constitute a limitation on the technical solutions provided in embodiments of this application. A person of ordinary skill in the art may know that: With the evolution of the network architecture and the emergence of new service scenarios, the technical solutions provided in embodiments of this application are also applicable to similar technical problems.

Optionally, each device (for example, the first terminal device, the second terminal device, or the network device) in FIG. 1 may be implemented by one device, may be jointly implemented by a plurality of devices, or may be one functional module in one device. This is not specifically limited in this embodiment of this application. It may be understood that the foregoing function may be a network element in a hardware device, a software function running on dedicated hardware, or a virtualization function instantiated on a platform (for example, a cloud platform).

For example, each device in FIG. 1 may be implemented by a communication apparatus 200 in FIG. 2. FIG. 2 is a diagram of a hardware structure of a communication apparatus that may be used for an embodiment of this application. The communication apparatus 200 includes at least one processor 201, a communication line 202, a memory 203, and at least one communication interface 204.

The processor 201 may be a general-purpose central processing unit (central processing unit, CPU), a microprocessor, an application-specific integrated circuit (application-specific integrated circuit, ASIC), or one or more integrated circuits configured to control execution of programs in the solutions in this application.

The communication line 202 may include a path through which information transmission is performed between the foregoing components.

The communication interface 204 is an apparatus (like an antenna) like any transceiver, and is configured to communicate with another device or a communication network, like the Ethernet, a RAN, or a wireless local area network (wireless local area network, WLAN).

The memory 203 may be a read-only memory (read-only memory, ROM) or another type of static storage device that can store static information and instructions, or a random access memory (random access memory, RAM) or another type of dynamic storage device that can store information and instructions. The memory 203 may alternatively be an electrically erasable programmable read-only memory (electrically erasable programmable read-only memory, EEPROM), a compact disc read-only memory (compact disc read-only memory, CD-ROM) or another compact disc storage, optical disc storage (including a compact disc, a laser disc, an optical disc, a digital versatile disc, a Blu-ray disc, or the like), or magnetic disk storage medium or another magnetic storage device, or any other medium that can be used to carry or store expected program code in a form of instructions or a data structure and that is accessible to a computer, but is not limited thereto. The memory may exist independently, and is connected to the processor through the communication line 202. The memory may alternatively be integrated with the processor. The memory provided in embodiments of this application may be usually non-volatile.

The memory 203 is configured to store computer-executable instructions for executing the solutions in this application, and the processor 201 controls the execution. The processor 201 is configured to execute the computer-executable instructions stored in the memory 203, to implement the method provided in the following embodiments of this application.

Optionally, the computer-executable instructions in this embodiment of this application may also be referred to as application program code. This is not specifically limited in this embodiment of this application.

In a possible implementation, the processor 201 may include one or more CPUs, for example, a CPU0 and a CPU1 in FIG. 2.

In a possible implementation, the communication apparatus 200 may include a plurality of processors, for example, the processor 201 and a processor 207 in FIG. 2. Each of the processors may be a single-core (single-CPU) processor, or may be a multi-core (multi-CPU) processor. The processor herein may be one or more devices, circuits, and/or processing cores configured to process data (for example, computer program instructions).

In a possible implementation, the communication apparatus 200 may further include an output device 205 and an input device 206. The output device 205 communicates with the processor 201, and may display information in a plurality of manners. For example, the output device 205 may be a liquid crystal display (liquid crystal display, LCD), a light emitting diode (light emitting diode, LED) display device, a cathode ray tube (cathode ray tube, CRT) display device, or a projector (projector). The input device 206 communicates with the processor 201, and may receive an input from a user in a plurality of manners. For example, the input device 206 may be a mouse, a keyboard, a touchscreen device, or a sensor device.

The foregoing communication apparatus 200 may be a general-purpose device or a special-purpose device. During specific implementation, the communication apparatus 200 may be a desktop computer, a portable computer, a network server, a personal digital assistant (personal digital assistant, PDA), a mobile phone, a tablet computer, a wireless terminal device, an embedded device, or a device having a structure similar to that in FIG. 2. A type of the communication apparatus 200 is not limited in this embodiment of this application.

The following describes this solution with reference to the accompanying drawings.

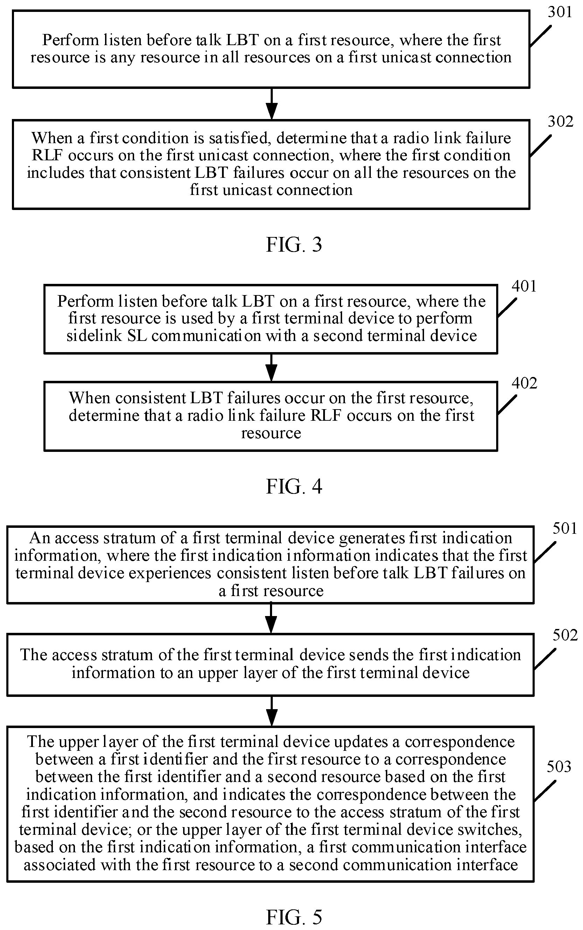

Generally, a terminal device may determine, in the following manners, whether an RLF occurs on a unicast connection: determining whether a quantity of retransmissions of an RLC entity included in the unicast connection reaches a maximum value; determining whether a T400 timer of the unicast connection expires; determining whether a MAC entity of the terminal device indicates that a quantity of continuous HARQ DTXs of the unicast connection reaches a maximum value; and determining whether integrity check on a PDCP entity of an SL-SRB2 or an SL-SRB3 of the unicast connection fails. However, because few application scenarios are covered when the foregoing manners are used to determine whether the RLF occurs on the unicast connection, the following case may occur: It is determined, by using the foregoing manners, that the RLF does not occur on the unicast connection, but actually the RLF occurs on the unicast connection. Consequently, quality of SL unicast communication cannot be ensured. To resolve this problem, refer to FIG. 3. FIG. 3 is a schematic flowchart of a communication method according to an embodiment of this application. The method includes but is not limited to the following steps.

301: A first terminal device performs LBT on a first resource, where the first resource is any resource in all resources on a first unicast connection, and the first unicast connection is a unicast connection on an SL between the first terminal device and a second terminal device.

Optionally, the first resource may include, for example, at least one of the following: a carrier, a bandwidth part, a resource pool, a resource block set, and a sub-channel. It should be understood that, one carrier may include one or more bandwidth parts, one bandwidth part may include one or more resource pools, one resource pool may include one or more resource block sets, one resource block set may include a sub-channel, and one sub-channel may include one or more PRBs.

Optionally, the first resource may be used for data transmission on a physical channel. The physical channel includes at least one of the following: a PSCCH, a PSSCH, a PSFCH, and a PSBCH. For example, the first resource may be, for example, a time domain resource and/or a frequency domain resource. The time domain resource may include, for example, at least one of the following: a frame, a subframe, a slot, a mini-slot, and a symbol. The frequency domain resource may include, for example, at least one of the following: a resource block group (resource block group, RBG), a resource block (resource block, RB), and a subcarrier.

It should be noted that all the resources on the first unicast connection may be understood as at least one of the following: all resources used for first unicast connection communication, and all resources that are on the first unicast connection and that are used by the first terminal device.

Optionally, all the resources on the first unicast connection are resources on an unlicensed spectrum. That all the resources on the first unicast connection are resources on the unlicensed spectrum may be understood as at least one of the following: All resources used for first unicast connection communication are resources on the unlicensed spectrum; and all resources that are on the first unicast connection and that are used by the first terminal device are resources on the unlicensed spectrum. It can be learned that, because all the resources on the first unicast connection are resources on the unlicensed spectrum, and an RLF occurs on the first unicast connection, it indicates that the first terminal device cannot use a resource on the unlicensed spectrum to perform communication. In this way, unreliable SL transmissions may be reduced, and quality of SL unicast communication is ensured.

302: When satisfying a first condition, the first terminal device determines that the RLF occurs on the first unicast connection, where the first condition includes that consistent LBT failures occur on all the resources on the first unicast connection.

Optionally, that the first terminal device satisfies the first condition includes: If determining that the consistent LBT failures occur on the first resource, the first terminal device determines whether the consistent LBT failures occur on another resource on the first unicast connection other than the first resource. If the consistent LBT failures also occur on the another resource, the first terminal device determines that the RLF occurs on the first unicast connection. It can be learned that when determining that the consistent LBT failures occur on a resource, the first terminal device may determine whether the consistent LBT failures occur on another resource on the unicast connection other than the resource. If the consistent LBT failures also occur on the another resource, the first terminal device may determine that the RLF occurs on the unicast connection, so that the first terminal device does not continue to perform data transmission on the unicast connection. In this way, the unreliable SL transmissions may be reduced, and the quality of the SL unicast communication is ensured.

It should be understood that, when the consistent LBT failures occur on the first resource, the first terminal device may perform resource re-selection to determine a third resource, or the first terminal device sends first indication information to a network device, and receives a third resource from the network device, where the third resource is used by the first terminal device to perform SL communication.

The third resource may include, for example, at least one of the following: a carrier, a bandwidth part, a resource pool, a resource block set, and a sub-channel.

Optionally, the third resource may be used for data transmission on a physical channel. The physical channel includes at least one of the following: a PSCCH, a PSSCH, a PSFCH, and a PSBCH. For example, the third resource may be, for example, a time domain resource and/or a frequency domain resource.

That the third resource is used by the first terminal device to perform SL communication may be understood as: The third resource is used by the first terminal device to perform SL communication with a terminal device other than the first terminal device.

It can be learned that, in the embodiment shown in FIG. 3, the first terminal device performs LBT on any resource in all the resources on the first unicast connection, and may determine, when the consistent LBT failures occur on all the resources on the first unicast connection, that the RLF occurs on the first unicast connection. This increases a manner of determining that an RLF occurs on a unicast connection. In addition, the first terminal device does not continue to perform data transmission on the unicast connection, so that the unreliable SL transmissions can be reduced, and the quality of the SL unicast communication is ensured.

Optionally, the method further includes: An access stratum of the first terminal device generates the first indication information, where the first indication information indicates that the first terminal device experiences the consistent LBT failures on the first resource. The access stratum of the first terminal device sends the first indication information to an upper layer of the first terminal device. The upper layer of the first terminal device updates a correspondence between a first identifier and the first resource to a correspondence between the first identifier and a second resource based on the first indication information, and indicates the correspondence between the first identifier and the second resource to the access stratum of the first terminal device. Alternatively, the upper layer of the first terminal device switches, based on the first indication information, a first communication interface associated with the first resource to a second communication interface. It can be learned that, this reduces the unreliable SL transmissions, and ensures the quality of the SL unicast communication.

In this application, the upper layer of the first terminal device is a V2X layer, a PC5-S layer, an application layer, or a ProSe communication layer.

Optionally, the first identifier may be an L2 ID of the first terminal device. The correspondence between the first identifier and the first resource may be understood as: The first identifier is in one-to-one correspondence with a first resource list, and the first resource list may include the first resource. The first resource list may further include a resource other than the first resource. Similarly, the correspondence between the first identifier and the second resource may be understood as: The first identifier is in one-to-one correspondence with a second resource list, and the second resource list may include the second resource. The second resource list may further include a resource other than the second resource. It should be noted that the first resource is different from the second resource.

Optionally, the second resource may include, for example, at least one of the following: a carrier, a bandwidth part, a resource pool, a resource block set, and a sub-channel.

Optionally, the second resource may be used for data transmission on a physical channel. The physical channel includes at least one of the following: a PSCCH, a PSSCH, a PSFCH, and a PSBCH. For example, the second resource may be, for example, a time domain resource and/or a frequency domain resource.

In this application, the first communication interface may be, for example, a PC5, and the second communication interface may be, for example, an interface between the first terminal device and the network device, where the interface between the first terminal device and the network device may be referred to as a Uu interface.

Optionally, that the access stratum of the first terminal device sends the first indication information to an upper layer of the first terminal device includes: If the consistent LBT failures occur on all the resources for the first terminal device on the unlicensed spectrum, the access stratum of the first terminal device sends the first indication information to the upper layer of the first terminal device. In this way, the upper layer of the first terminal device may learn of a status of using the resource on the unlicensed spectrum to perform communication.

Optionally, the first indication information may further indicate that the first terminal device cannot use the resource on the unlicensed spectrum to perform communication. In this way, the upper layer of the first terminal device may learn that the first terminal device cannot use the resource on the unlicensed spectrum to perform communication.

That the first indication information indicates that the first terminal device cannot use the resource on the unlicensed spectrum to perform communication may be understood as: The first indication information indicates that unlicensed spectrum communication of the first terminal device is unavailable.

Optionally, after obtaining the correspondence between the first identifier and the second resource, the access stratum of the first terminal device may perform communication by using the second resource. For example, the access stratum of the first terminal device may perform communication with a terminal device other than the first terminal device by using the second resource.

Currently, only how to determine whether the RLF occurs on the unicast connection is described, and RLF determining in another scenario is still unknown. To resolve this problem, refer to FIG. 4. FIG. 4 is a schematic flowchart of another communication method according to an embodiment of this application. The method includes but is not limited to the following steps.

401: A first terminal device performs LBT on a first resource, where the first resource is used by the first terminal device to perform SL communication with a second terminal device.

For the first resource, refer to descriptions of the first resource in step 301 in FIG. 3. Details are not described herein again.

402: The first terminal device determines, when consistent LBT failures occur on the first resource, that an RLF occurs on the first resource.

It should be understood that, when the consistent LBT failures occur on the first resource, the first terminal device may perform resource re-selection to determine a third resource, or the first terminal device sends first indication information to a network device, and receives a third resource from the network device, where the third resource is used by the first terminal device to perform SL communication. For the third resource, refer to descriptions of the third resource in step 302 in FIG. 3. Details are not described herein again.

It can be learned that, in the embodiment shown in FIG. 4, the first terminal device performs LBT on the first resource used by the first terminal device to perform SL communication with the second terminal device, so that when the consistent LBT failures occur on the first resource, the first terminal device can determine that the RLF occurs on the first resource. This implements RLF determining at a resource granularity. In addition, the first terminal device does not continue to perform data transmission on the first resource, so that unreliable SL transmissions can be reduced, and quality of SL unicast communication is ensured.

Optionally, after step 402, the method further includes: The first terminal device releases a first bearer associated with the first resource, where the first bearer includes at least one of the following: an SL DRB, an SL SRB, and an SL RLC bearer. It can be learned that the first terminal device may release the first bearer associated with the first resource, so that the first terminal device does not need to continue to maintain the first bearer. In this way, energy consumption is reduced.

It should be understood that the first bearer may be, for example, a bearer between the first terminal device and the second terminal device. Specifically, the SL DRB may be, for example, an SL DRB between the first terminal device and the second terminal device. The SL SRB may be, for example, an SL SRB between the first terminal device and the second terminal device. The SL RLC bearer may be, for example, an SL RLC bearer between the first terminal device and the second terminal device.

It should be noted that a sidelink radio bearer (sidelink Radio Bearer, SL RB) is a general term of a series of protocol entities and configurations allocated by a network device to a terminal device, is a service provided by a layer-2 for transmitting user data between terminal devices, and includes a series of configurations such as a packet data convergence protocol (packet data convergence protocol, PDCP) layer entity. The SL RB may include an SL DRB and an SL SRB. The SL DRB is used to carry data, and the SL SRB is used to carry a signaling message. The SL RLC bearer is a protocol entity below an RLC layer and a configuration of the protocol entity, is a lower-layer part of the SL RB, and includes a series of configurations such as an RLC layer entity and a logical channel.

Optionally, after step 402, the method further includes: The first terminal device discards SL configuration information associated with the first resource. It can be learned that because the first terminal device discards the SL configuration information associated with the first resource, storage space may be saved. In addition, the first terminal device does not need to continue to maintain the SL configuration information, so that the energy consumption is reduced, and implementation complexity may also be reduced.

The SL configuration information may include, for example, at least one of the following: configuration information of the first resource and configuration information of the first bearer.

Optionally, that the first terminal device discards SL configuration information associated with the first resource may be understood as: The first terminal device deletes the SL configuration information associated with the first resource.

Optionally, after step 402, the method further includes: The first terminal device resets a MAC layer entity corresponding to the first resource. It can be learned that, because the first terminal device resets the MAC layer entity corresponding to the first resource, a buffer (for example, a soft buffer) may be cleared, so that storage space can be saved.

In this application, the first terminal device resets the MAC layer entity corresponding to the first resource. The MAC entity of the first terminal device may perform at least one of the following: canceling a triggered SR associated with an RRC connection, canceling a triggered SL BSR associated with the RRC connection, and clearing a buffer (for example, a soft buffer) of an SL process associated with the RRC connection.

Optionally, after step 402, the method further includes: The first terminal device sends the first indication information to the network device, where the first indication information indicates that the RLF occurs on the first resource. In this way, the network device may learn that the RLF occurs on the first resource.

For example, the first indication information may be carried in a sidelink user information (sidelink UE information, SUI) message.

It should be understood that the first terminal device may perform one or more of the following steps: releasing the first bearer associated with the first resource, discarding the SL configuration information associated with the first resource, resetting the MAC layer entity corresponding to the first resource, sending the first indication information to the network device, and the like.

Currently, an upper layer of the terminal device may learn that the terminal device experiences the consistent LBT failures. However, after learning that the terminal device experiences the consistent LBT failures, the upper layer of the terminal device does not perform a corresponding operation to ensure communication quality. To resolve this problem, refer to FIG. 5. FIG. 5 is a schematic flowchart of another communication method according to an embodiment of this application. The method includes but is not limited to the following steps.

501: An access stratum of a first terminal device generates first indication information, where the first indication information indicates that the first terminal device experiences consistent LBT failures on a first resource.

For the first resource, refer to descriptions of the first resource in step 301 in FIG. 3. Details are not described herein again.

502: The access stratum of the first terminal device sends the first indication information to an upper layer of the first terminal device.

Correspondingly, the upper layer of the first terminal device receives the first indication information from the access stratum of the first terminal device.

For the upper layer of the first terminal device, refer to descriptions of the upper layer of the first terminal device in FIG. 3. Details are not described herein again.

503: The upper layer of the first terminal device updates a correspondence between a first identifier and the first resource to a correspondence between the first identifier and a second resource based on the first indication information, and indicates the correspondence between the first identifier and the second resource to the access stratum of the first terminal device. Alternatively, the upper layer of the first terminal device switches, based on the first indication information, a first communication interface associated with the first resource to a second communication interface.

For step 503, refer to related descriptions in FIG. 3. Details are not described herein again.

It can be learned that, in the embodiment shown in FIG. 5, the access stratum of the first terminal device may learn of the correspondence between the first identifier and the new resource, and may perform communication by using the new resource associated with the first identifier, to reduce unreliable SL transmissions and ensure quality of SL unicast communication. Alternatively, the first terminal device may perform data transmission through the second communication interface, to reduce unreliable SL transmissions and ensure quality of SL unicast communication.

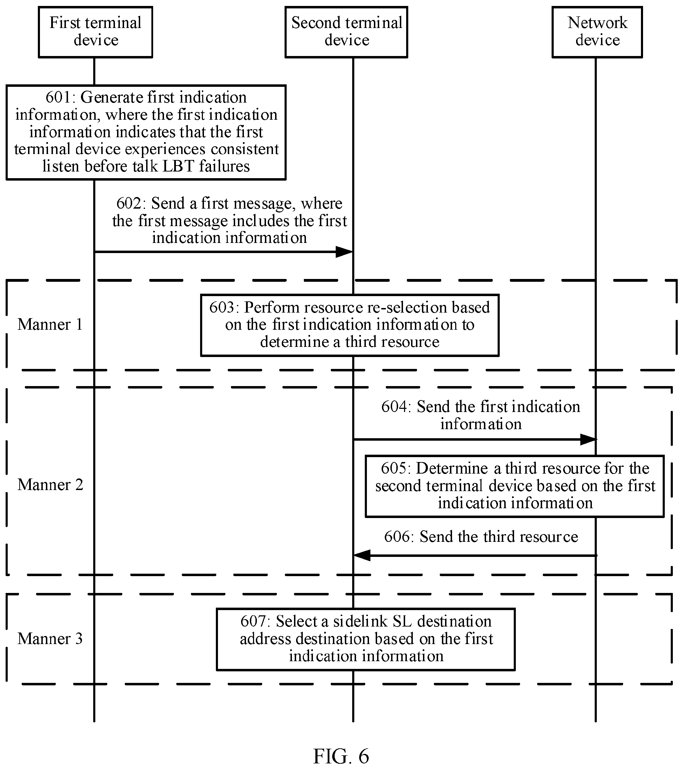

Currently, the terminal device can learn only that the terminal device experiences the consistent LBT failures. Consequently, a resource used by the terminal device during communication may be a resource on which another terminal device experiences the consistent LBT failures. This may affect communication quality of the terminal device. To resolve this problem, refer to FIG. 6. FIG. 6 is a schematic flowchart of another communication method according to an embodiment of this application. The method includes but is not limited to the following steps.

601: A first terminal device generates first indication information, where the first indication information indicates that the first terminal device experiences consistent LBT failures.

Optionally, that the first indication information indicates that the first terminal device experiences consistent listen before talk LBT failures includes: The first indication information indicates that the first terminal device experiences the consistent LBT failures on a second resource. It can be learned that, in this way, a second terminal device may learn that the first terminal device experiences the consistent LBT failures on the second resource.

The second resource may include, for example, at least one of the following: a carrier, a bandwidth part, a resource pool, a resource block set, and a sub-channel.

Optionally, the second resource may be used for data transmission on a physical channel. The physical channel includes at least one of the following: a PSCCH, a PSSCH, a PSFCH, and a PSBCH. For example, the second resource may be, for example, a time domain resource and/or a frequency domain resource.

That the second resource is used by the first terminal device to perform SL communication may be understood as at least one of the following: The first resource is used by the first terminal device to perform SL communication with the second terminal device; and the second resource is used by the first terminal device to perform SL communication with a terminal device other than the first terminal device.

Optionally, the method further includes: The first terminal device receives second indication information from the second terminal device, where the second indication information is used to allow the first terminal device to send, to the second terminal device, indication information indicating that the first terminal device experiences the consistent LBT failures. It can be learned that, because the second indication information is used to allow the first terminal device to send, to the second terminal device, the indication information indicating that the first terminal device experiences the consistent LBT failures, the first terminal device may send, to the second terminal device when the first terminal device experiences the consistent LBT failures, the indication information indicating that the first terminal device experiences the consistent LBT failures.

That the second indication information is used to allow the first terminal device to send, to the second terminal device, indication information indicating that the first terminal device experiences the consistent LBT failures includes: The second indication information is used to allow the first terminal device to send, to the second terminal device in a case in which the consistent LBT failures occur on a first resource, the indication information indicating that the first terminal device experiences the consistent LBT failures. It can be learned that, because the second indication information is used to allow the first terminal device to send, to the second terminal device in the case in which the consistent LBT failures occur on the first resource, the indication information indicating that the first terminal device experiences the consistent LBT failures, the first terminal device may send, to the second terminal device when the first terminal device experiences the consistent LBT failures on the first resource, the indication information indicating that the first terminal device experiences the consistent LBT failures.

It should be noted that, for the first resource, refer to descriptions of the first resource in step 301 in FIG. 3. Details are not described herein again.

That the second indication information is used to allow the first terminal device to send, to the second terminal device in a case in which the consistent LBT failures occur on a first resource, the indication information indicating that the first terminal device experiences the consistent LBT failures may be understood as: The second indication information is used to allow the first terminal device to send, to the second terminal device when the consistent LBT failures occur on the first resource, the indication information indicating that the first terminal device experiences the consistent LBT failures. In other words, when the first terminal device experiences the consistent LBT failures on the first resource, the first terminal device is immediately triggered to send, to the second terminal device, the indication information indicating that the first terminal device experiences the consistent LBT failures. Alternatively, that the second indication information is used to allow the first terminal device to send, to the second terminal device in a case in which the consistent LBT failures occur on a first resource, the indication information indicating that the first terminal device experiences the consistent LBT failures may be understood as: The second indication information is used to allow the first terminal device to send, to the second terminal device after the consistent LBT failures occur on the first resource, the indication information indicating that the first terminal device experiences the consistent LBT failures. In other words, when the first terminal device experiences the consistent LBT failures on the first resource, the first terminal device may wait for a period of time and then send, to the second terminal device, the indication information indicating that the first terminal device experiences the consistent LBT failures.

It should be understood that, in a possible implementation, the second indication information is further used to allow the first terminal device to indicate, to the second terminal device when the consistent LBT failures occur on a resource other than the first resource, that the first terminal device experiences the consistent LBT failures.

Optionally, the first resource is the same as the second resource.

For example, when the second indication information is used to allow the first terminal device to send, to the second terminal device in the case in which the consistent LBT failures occur on the first resource, the indication information indicating that the first terminal device experiences the consistent LBT failures, the first resource is the same as the second resource.

Optionally, the method may further include step 602.

602: The first terminal device sends a first message to the second terminal device, where the first message includes the first indication information.

Correspondingly, the second terminal device receives the first message from the first terminal device.

The first message is a unicast message, a multicast message, or a broadcast message.

In a possible implementation, the first message is a unicast message, and a resource on a unicast connection between the first terminal device and the second terminal device is a resource on an unlicensed spectrum. This may also be understood as: When communication on the unicast connection between the first terminal device and the second terminal device is performed by using a resource on the unlicensed spectrum, the first terminal device sends the first indication information to the second terminal device by using a unicast message. This may reduce use of an inappropriate resource on the unlicensed spectrum by the second terminal device for communication.

In another possible implementation, the first message is a multicast message or a broadcast message, the first message is carried in a first transport block, and the first transport block includes a destination layer-2 identifier. The destination layer-2 identifier indicates that the first transport block carries the first message. Alternatively, the destination layer-2 identifier indicates a service type of a multicast service, and the first message and the multicast service are multiplexed in the first transport block. Alternatively, the destination layer-2 identifier indicates a service type of a broadcast service, and the first message and the broadcast service are multiplexed in the first transport block. It can be learned that, because the destination layer-2 identifier indicates that the first transport block carries the first message, when the second terminal device is interested in the first message, the second terminal device may receive the first message, and then learn that the first terminal device experiences the consistent LBT failures. Similarly, because the destination layer-2 identifier indicates the service type of the multicast service or the service type of the broadcast service, and the first message and the multicast service are multiplexed in the first transport block, or the first message and the broadcast service are multiplexed in the first transport block, when the second terminal device is interested in the service type, the second terminal device may learn, by obtaining the first transport block, that the first terminal device experiences the consistent LBT failures.

It should be understood that in this application, in a case in which the destination layer-2 identifier indicates that the first transport block carries the first message, the destination layer-2 identifier may be, for example, a dedicated identifier, an identifier predefined in a protocol, or a preconfigured identifier. This is not limited herein.

Optionally, that the destination layer-2 identifier indicates a service type of a multicast service may be understood as: The destination layer-2 identifier indicates one terminal device group, where one terminal device group includes one or more terminal devices that perform SL multicast communication.

There may be one or more service types of multicast services or broadcast services. This is not limited herein.

Optionally, after step 602, the method may be implemented in any one of the following manners. It should be understood that a specific manner used by the second terminal device may depend on implementation of the second terminal device, a pre-agreement, or a definition in a standard.

Manner 1 includes step 603. Manner 2 includes step 604 to step 606. Manner 3 includes step 607. It may be understood that different manners may be used in combination.

603: The second terminal device performs resource re-selection based on the first indication information to determine a third resource.

The third resource may include, for example, at least one of the following: a carrier, a bandwidth part, a resource pool, a resource block set, and a sub-channel.

Optionally, the third resource may be used for data transmission on a physical channel. The physical channel includes at least one of the following: a PSCCH, a PSSCH, a PSFCH, and a PSBCH. For example, the third resource may be, for example, a time domain resource and/or a frequency domain resource.

That the third resource is used by the second terminal device to perform SL communication may be understood as at least one of the following: The third resource is used by the second terminal device to perform SL communication with the first terminal device; and the third resource is used by the second terminal device to perform SL communication with a terminal device other than the first terminal device.

It should be noted that the third resource is different from the second resource.

Optionally, step 603 may include: If there is data to be sent to the first terminal device, the second terminal device performs resource re-selection based on the first indication information to determine the third resource. It can be learned that when there is data to be sent to the first terminal device, the second terminal device performs resource re-selection based on the first indication information to determine the third resource. Then, the second terminal device may perform reliable transmission with the first terminal device on the third resource. This ensures communication quality.

604: The second terminal device sends the first indication information to a network device.

Correspondingly, the network device receives the first indication information from the second terminal device.

605: The network device determines a third resource for the second terminal device based on the first indication information.

606: The network device sends the third resource to the second terminal device.

Correspondingly, the second terminal device receives the third resource from the network device.

607: The second terminal device selects an SL destination based on the first indication information.

If an SL grant overlaps the second resource, the SL destination does not include a destination corresponding to the first terminal device. It can be learned that when the SL grant overlaps the second resource, the SL destination does not include the destination corresponding to the first terminal device. In other words, the second terminal device does not use the second resource to communicate with the first terminal device. This may reduce the use of the inappropriate resource on the unlicensed spectrum by the second terminal device for communication with the first terminal device.

The SL grant may be a resource configured by the network device for the second terminal device, or may be a resource that is on the unlicensed spectrum and that is determined by the second terminal device. For example, the SL grant is a resource that is on the unlicensed spectrum and that is obtained by the second terminal device through listening and/or LBT.

It should be noted that, that an SL grant overlaps the second resource may be understood as one of the following: The SL grant partially overlaps the second resource; and the SL grant completely overlaps the second resource.

It can be learned that, in the embodiment shown in FIG. 6, the first terminal device may send the first message to the second terminal device. Because the first message includes the first indication information, and the first indication information indicates that the first terminal device experiences the consistent LBT failures, the second terminal device may learn that the first terminal device experiences the consistent LBT failures. Then, the second terminal device may perform resource re-selection to determine the third resource or receive the third resource from the network device. This avoids a problem of poor communication quality caused because the second terminal device uses the second resource to perform SL communication. In addition, when selecting the SL destination, the second terminal device may select a more reliable SL destination. This ensures the communication quality.

Optionally, the method may further include: A MAC layer or an RLC layer of the second terminal device indicates, to a PHY layer of the second terminal device, that the first terminal device experiences the consistent LBT failures on the second resource. It can be learned that, because the MAC layer or the RLC layer of the second terminal device indicates, to the PHY layer of the second terminal device, that the first terminal device experiences the consistent LBT failures on the second resource, the PHY layer of the second terminal device may be triggered to perform resource re-selection.

The foregoing mainly describes the solutions provided in this application from a perspective of interaction between devices. It may be understood that in the foregoing implementations, to implement the foregoing functions, each device includes a corresponding hardware structure and/or software module for performing each function. A person skilled in the art should easily be aware that, in combination with units and algorithm steps of the examples described in embodiments disclosed in this specification, this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the first terminal device, the second terminal device, or the network device may be divided into functional modules based on the foregoing method examples. For example, each functional module may be obtained through division based on a corresponding function, or two or more functions may be integrated into one processing module. The integrated module may be implemented in a form of hardware, or may be implemented in a form of a software functional module. It should be noted that, in embodiments of this application, module division is an example, and is merely a logical function division. During actual implementation, another division manner may be used.

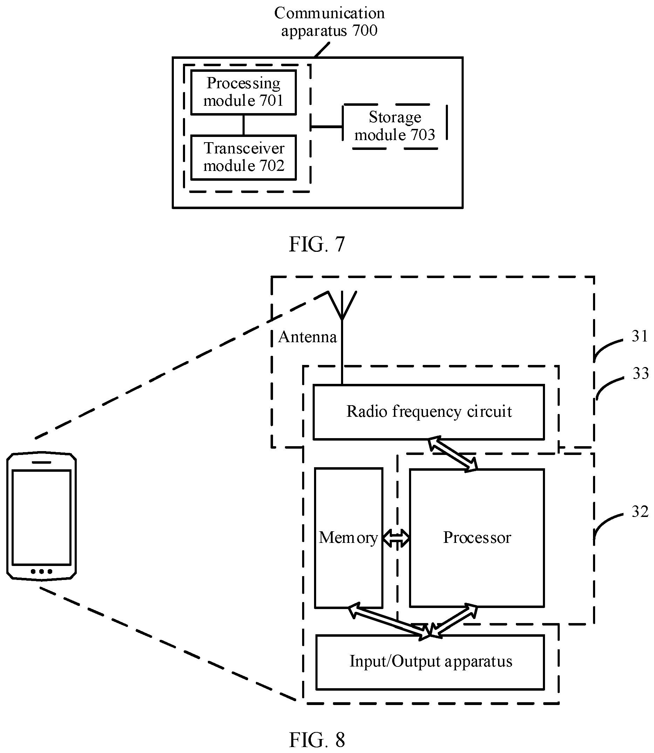

If the integrated module is used, refer to FIG. 7. FIG. 7 is a diagram of a structure of a communication apparatus according to an embodiment of this application. The communication apparatus 700 may be used in the method shown in any one of the foregoing embodiments in FIG. 3 to FIG. 6. As shown in FIG. 7, the communication apparatus 700 includes a processing module 701 and a transceiver module 702. The processing module 701 may be one or more processors, and the transceiver module 702 may be a transceiver or a communication interface. The communication apparatus may be configured to implement a function of the first terminal device, the second terminal device, or the network device in any one of the foregoing method embodiments, or configured to implement a function of a network element in any one of the foregoing method embodiments. The network element or network function may be a network element in a hardware device, a software function running on dedicated hardware, or a virtualization function instantiated on a platform (for example, a cloud platform). Optionally, the communication apparatus 700 may further include a storage module 703, configured to store program code and/or data of the communication apparatus 700.

In a possible implementation, the communication apparatus is used as the first terminal device or a chip used in the first terminal device, and performs the steps performed by the first terminal device in the foregoing method embodiments. The transceiver module 702 is configured to support communication with the second terminal device, the network device, or the like. The transceiver module specifically performs sending and/or receiving actions performed by the first terminal device in any one of the embodiments in FIG. 3 to FIG. 6, for example, supports the first terminal device in performing step 602 and/or another process of the technology described in this specification. The processing module 701 may be configured to support the communication apparatus 700 in performing processing actions in the foregoing method embodiments, for example, support the first terminal device in performing one or more steps in step 301, step 302, and the like, and/or another process of the technology described in this specification.

In an example, the processing module 701 is configured to perform LBT on a first resource, where the first resource is any resource in all resources on a first unicast connection, and the first unicast connection is a unicast connection on a sidelink SL between the first terminal device and the second terminal device. When satisfying a first condition, the processing module 701 is configured to determine that an RLF occurs on the first unicast connection, where the first condition includes that consistent LBT failures occur on all the resources on the first unicast connection.

Optionally, when satisfying the first condition, the processing module 701 is configured to: if determining that the consistent LBT failures occur on the first resource, determine whether the consistent LBT failures occur on another resource on the first unicast connection other than the first resource; and if the consistent LBT failures also occur on the another resource, determine that the RLF occurs on the first unicast connection.

Optionally, all the resources on the first unicast connection are resources on an unlicensed spectrum.

Optionally, the processing module 701 is configured to generate first indication information via an access stratum of the first terminal device, where the first indication information indicates that the first terminal device experiences the consistent LBT failures on the first resource. The transceiver module 702 is configured to send the first indication information to an upper layer of the first terminal device via the access stratum of the first terminal device. The processing module 701 is configured to update, via the upper layer of the first terminal device, a correspondence between a first identifier and the first resource to a correspondence between the first identifier and a second resource based on the first indication information, and indicate the correspondence between the first identifier and the second resource to the access stratum of the first terminal device. Alternatively, the upper layer of the first terminal device switches, based on the first indication information, a first communication interface associated with the first resource to a second communication interface.

Optionally, when the access stratum of the first terminal device sends the first indication information to the upper layer of the first terminal device, if the consistent LBT failures occur on all the resources for the first terminal device on the unlicensed spectrum, the transceiver module 702 is configured to send the first indication information to the upper layer of the first terminal device via the access stratum of the first terminal device.

Optionally, the first indication information further indicates that the first terminal device cannot use a resource on the unlicensed spectrum to perform communication.

In another example, the processing module 701 is configured to perform LBT on a first resource, where the first resource is used by the first terminal device to perform SL communication with the second terminal device. The processing module 701 is further configured to determine, when consistent LBT failures occur on the first resource, that an RLF occurs on the first resource.

Optionally, the processing module 701 is further configured to release a first bearer associated with the first resource, where the first bearer includes at least one of the following: an SL DRB, an SL SRB, and an SL RLC bearer.

Optionally, the processing module 701 is further configured to discard SL configuration information associated with the first resource.

Optionally, the processing module 701 is further configured to reset a MAC layer entity corresponding to the first resource.

Optionally, the transceiver module 702 is further configured to send first indication information to the network device, where the first indication information indicates that the RLF occurs on the first resource.

In another example, the processing module 701 is configured to generate first indication information via an access stratum of the first terminal device, where the first indication information indicates that the first terminal device experiences consistent LBT failures on a first resource. The transceiver module 702 is configured to send the first indication information to an upper layer of the first terminal device via the access stratum of the first terminal device. The processing module 701 is configured to update, via the upper layer of the first terminal device, a correspondence between a first identifier and the first resource to a correspondence between the first identifier and a second resource based on the first indication information, and indicate the correspondence between the first identifier and the second resource to the access stratum of the first terminal device. Alternatively, the upper layer of the first terminal device switches, based on the first indication information, a first communication interface associated with the first resource to a second communication interface.

Optionally, when the access stratum of the first terminal device sends the first indication information to the upper layer of the first terminal device, if the consistent LBT failures occur on all the resources for the first terminal device on an unlicensed spectrum, the transceiver module 702 is configured to send the first indication information to the upper layer of the first terminal device via the access stratum of the first terminal device.

Optionally, the first indication information further indicates that the first terminal device cannot use a resource on the unlicensed spectrum to perform communication.

In another example, the processing module 701 is configured to generate first indication information, where the first indication information indicates that the first terminal device experiences consistent LBT failures. The transceiver module 702 is configured to send a first message to the second terminal device, where the first message includes the first indication information, and the first message is a unicast message, a multicast message, or a broadcast message.

Optionally, the first message is a unicast message, and a resource on a unicast connection between the first terminal device and the second terminal device is a resource on an unlicensed spectrum.

Optionally, the first message is a multicast message or a broadcast message, the first message is carried in a first transport block, and the first transport block includes a destination layer-2 identifier. The destination layer-2 identifier indicates that the first transport block carries the first message. Alternatively, the destination layer-2 identifier indicates a service type of a multicast service, and the first message and the multicast service are multiplexed in the first transport block. Alternatively, the destination layer-2 identifier indicates a service type of a broadcast service, and the first message and the broadcast service are multiplexed in the first transport block.

Optionally, the transceiver module 702 is further configured to receive second indication information from the second terminal device, where the second indication information is used to allow the first terminal device to send, to the second terminal device, indication information indicating that the first terminal device experiences the consistent LBT failures.

Optionally, that the second indication information is used to allow the first terminal device to send, to the second terminal device, indication information indicating that the first terminal device experiences the consistent LBT failures includes: The second indication information is used to allow the first terminal device to send, to the second terminal device in a case in which the consistent LBT failures occur on a first resource, the indication information indicating that the first terminal device experiences the consistent LBT failures.

Optionally, that the first indication information indicates that the first terminal device experiences consistent LBT failures includes: The first indication information indicates that the first terminal device experiences the consistent LBT failures on a second resource.

In another possible implementation, the communication apparatus is used as the second terminal device or a chip used in the second terminal device, and performs the steps performed by the second terminal device in the foregoing method embodiments. The transceiver module 702 is configured to support communication with the first terminal device, the network device, or the like. The transceiver module specifically performs sending and/or receiving actions performed by the second terminal device in any one of the embodiments in FIG. 3 to FIG. 6, for example, supports the second terminal device in performing step 604 and/or another process of the technology described in this specification. The processing module 701 may be configured to support the communication apparatus 700 in performing processing actions in the foregoing method embodiments, for example, support the second terminal device in performing step 603, and/or another process of the technology described in this specification.

In an example, the transceiver module 702 is configured to receive a first message from the first terminal device, where the first message includes first indication information, the first message is a unicast message, a multicast message, or a broadcast message, and the first indication information indicates that the first terminal device experiences consistent LBT failures. The processing module 701 is configured to perform resource re-selection based on the first indication information to determine a third resource. Alternatively, the transceiver module 702 is further configured to: send the first indication information to the network device, and receive a third resource from the network device. The third resource is used by the second terminal device to perform SL communication.

Optionally, the first message is a unicast message, and a resource on a unicast connection between the first terminal device and the second terminal device is a resource on an unlicensed spectrum.

Optionally, the first message is a multicast message or a broadcast message, the first message is carried in a first transport block, and the first transport block includes a destination layer-2 identifier. The destination layer-2 identifier indicates that the first transport block carries the first message. Alternatively, the destination layer-2 identifier indicates a service type of a multicast service, and the first message and the multicast service are multiplexed in the first transport block. Alternatively, the destination layer-2 identifier indicates a service type of a broadcast service, and the first message and the broadcast service are multiplexed in the first transport block.

Optionally, the transceiver module 702 is further configured to send second indication information to the first terminal device, where the second indication information is used to allow the first terminal device to send, to the second terminal device, indication information indicating that the first terminal device experiences the consistent LBT failures.

Optionally, that the second indication information is used to allow the first terminal device to send, to the second terminal device, indication information indicating that the first terminal device experiences the consistent LBT failures includes: The second indication information is used to allow the first terminal device to send, to the second terminal device in a case in which the consistent LBT failures occur on a first resource, the indication information indicating that the first terminal device experiences the consistent LBT failures.

Optionally, that the first indication information indicates that the first terminal device experiences consistent LBT failures includes: The first indication information indicates that the first terminal device experiences the consistent LBT failures on a second resource.

Optionally, the transceiver module 702 is further configured to indicate, to a PHY layer of the second terminal device via a MAC layer or an RLC layer of the second terminal device, that the first terminal device experiences the consistent LBT failures on the second resource.

Optionally, when performing resource re-selection based on the first indication information to determine the third resource, the processing module 701 is configured to: if there is data to be sent to the first terminal device, perform resource re-selection based on the first indication information to determine the third resource.

Optionally, the processing module 701 is further configured to select an SL destination based on the first indication information.

Optionally, if an SL grant overlaps the second resource, the SL destination does not include a destination corresponding to the first terminal device.

In still another possible implementation, the communication apparatus is used as the network device or a chip used in the network device, and performs the steps performed by the network device in the foregoing method embodiments. The transceiver module 702 is configured to support communication with the first terminal device, the second terminal device, or the like. The transceiver module specifically performs sending and/or receiving actions performed by the network device in any one of the embodiments in FIG. 3 to FIG. 6, for example, supports the network device in performing another process of the technology described in this specification. The processing module 701 may be configured to support the communication apparatus 700 in performing processing actions in the foregoing method embodiments, for example, support the network device in performing step 605, and/or another process of the technology described in this specification.

In an example, the transceiver module 702 is configured to receive first indication information from the second terminal device, where the first indication information indicates that the first terminal device experiences consistent LBT failures. The processing module 701 is configured to determine a third resource for the second terminal device based on the first indication information. The transceiver module 702 is further configured to send the third resource to the second terminal device.

Optionally, that the first indication information indicates that the first terminal device experiences consistent LBT failures includes: The first indication information indicates that the first terminal device experiences the consistent LBT failures on a second resource.

In a possible implementation, when the first terminal device, the second terminal device, or the network device is a chip, the transceiver module 702 may be a communication interface, a pin, a circuit, or the like. The communication interface may be configured to input to-be-processed data into a processor, and may output a processing result of the processor to the outside. During specific implementation, the communication interface may be a general-purpose input/output (general-purpose input/output, GPIO) interface, and may be connected to a plurality of peripheral devices (for example, a display (LCD), a camera (camera), a radio frequency (radio frequency, RF) module, and an antenna). The communication interface is connected to the processor through a bus.

The processing module 701 may be a processor. The processor may execute computer-executable instructions stored in the storage module, so that the chip performs the method in any one of the embodiments in FIG. 3 to FIG. 6.

Further, the processor may include a controller, an arithmetic unit, and a register. For example, the controller is mainly responsible for instruction decoding, and transmitting a control signal for an operation corresponding to the instructions. The arithmetic unit is mainly responsible for performing a fixed-point or floating-point arithmetic operation, a shift operation, a logic operation, and the like, and may also perform an address operation and address translation. The register is mainly responsible for saving a quantity of register operations, intermediate operation results, and the like that are temporarily stored during instruction execution. During specific implementation, a hardware architecture of the processor may be an application-specific integrated circuit (application-specific integrated circuit, ASIC) architecture, a microprocessor without interlocked piped stages architecture (microprocessor without interlocked piped stages architecture, MIPS), an advanced reduced instruction set computing machine (advanced RISC machine, ARM) architecture, a network processor (network processor, NP) architecture, or the like. The processor may be a single-core or multi-core processor.

The storage module may be a storage module inside the chip, for example, a register or a cache. Alternatively, the storage module may be a storage module located outside the chip, for example, a read-only memory (Read-Only Memory, ROM), another type of static storage device that can store static information and instructions, or a random access memory (Random Access Memory, RAM).

It should be noted that a function corresponding to each of the processor and the interface may be implemented by using a hardware design, may be implemented by using a software design, or may be implemented by a combination of software and hardware. This is not limited herein.

FIG. 8 is a diagram of a structure of a simplified terminal device according to an embodiment of this application. For case of understanding and convenience of illustration, in FIG. 8, an example in which a terminal device is a mobile phone is used. As shown in FIG. 8, the terminal device includes at least one processor, and may further include a radio frequency circuit, an antenna, and an input/output apparatus. The processor may be configured to process a communication protocol and communication data, and may be further configured to control the terminal device, execute a software program, process data of the software program, and the like. The terminal device may further include a memory. The memory is mainly configured to store a software program and data. These related programs may be loaded into the memory when the communication apparatus is delivered from a factory, or may be loaded into the memory when needed later. The radio frequency circuit is mainly configured to: perform conversion between a baseband signal and a radio frequency signal, and process the radio frequency signal. The antenna is mainly configured to send/receive a radio frequency signal in an electromagnetic wave form, and the antenna is the antenna provided in embodiments of this application. The input/output apparatus, such as a touchscreen, a display, or a keyboard, is mainly configured to: receive data input by a user and output data to the user. It should be noted that some types of terminal devices may have no input/output apparatus.

When needing to send data, after performing baseband processing on the to-be-sent data, the processor outputs a baseband signal to the radio frequency circuit; and the radio frequency circuit performs radio frequency processing on the baseband signal and then sends the radio frequency signal to the outside in a form of an electromagnetic wave through the antenna. When data is sent to the terminal device, the radio frequency circuit receives the radio frequency signal through the antenna, converts the radio frequency signal into a baseband signal, and outputs the baseband signal to the processor. The processor converts the baseband signal into data, and processes the data. For ease of description, FIG. 8 shows only one memory and one processor. In an actual terminal device product, there may be one or more processors and one or more memories. The memory may also be referred to as a storage medium, a storage device, or the like. The memory may be disposed independent of the processor, or may be integrated with the processor. This is not limited in embodiments of this application.

In this embodiment of this application, the antenna and the radio frequency circuit that have receiving and sending functions may be considered as a receiving unit and a sending unit (which may also be collectively referred to as a transceiver unit) of the terminal device, and a processor having a processing function may be considered as a processing unit of the terminal device. As shown in FIG. 8, the terminal device includes a receiving module 31, a processing module 32, and a sending module 33. The receiving module 31 may also be referred to as a receiver, a receiving machine, a receiver circuit, or the like. The sending module 33 may also be referred to as a sender, a transmitter, a transmitter machine, a transmitter circuit, or the like. The processing module 32 may also be referred to as a processor, a processing board, a processing apparatus, or the like.

For example, the processing module 32 is configured to perform a function of the terminal device in any one of the embodiments shown in FIG. 3 to FIG. 6.

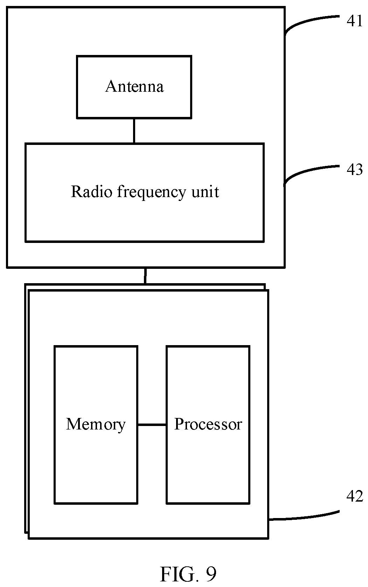

FIG. 9 is a diagram of a structure of a simplified network device according to an embodiment of this application. The network device includes a baseband part 42 and a part for radio frequency signal transmission/reception and conversion. The part for radio frequency signal transmission/reception and conversion further includes a receiving module part 41 and a sending module part 43 (which may also be collectively referred to as a transceiver module). The part for radio frequency signal transmission/reception and conversion is mainly configured to: send/receive a radio frequency signal and perform conversion between a radio frequency signal and a baseband signal. The baseband part 42 is mainly configured to: perform baseband processing, control the network device, and the like. The receiving module 41 may also be referred to as a receiver, a receiving machine, a receiver circuit, or the like. The sending module 43 may also be referred to as a sender, a transmitter, a transmitter machine, a transmitter circuit, or the like. The baseband part 42 is usually a control center of the network device, may also be referred to as a processing module, and is configured to perform the steps performed by the network device in any one of the embodiments shown in FIG. 3 to FIG. 6. For details, refer to the foregoing descriptions of the related parts.

The baseband part 42 may include one or more boards. Each board may include one or more processors and one or more memories. The processor is configured to read and execute a program in the memory, to implement a baseband processing function and control the network device. If there are a plurality of boards, the boards may be interconnected to improve a processing capability. In an optional implementation, the plurality of boards may share one or more processors, or the plurality of boards share one or more memories, or the plurality of boards share one or more processors at the same time.

For example, for a first network device, the sending module 43 is configured to perform a function of the network device in any one of the embodiments shown in FIG. 3 to FIG. 6.

An embodiment of this application further provides a communication apparatus, including a processor, where the processor is coupled to a memory, and the memory stores a computer program. The processor is configured to invoke the computer program in the memory, so that the communication apparatus performs the method in any one of the embodiments in FIG. 3 to FIG. 6.

An embodiment of this application further provides a communication apparatus, including a processor and an interface circuit. The interface circuit is configured to receive a signal from a communication apparatus other than the communication apparatus and transmit the signal to the processor, or send a signal from the processor to a communication apparatus other than the communication apparatus. The processor is configured to implement the method in any one of the embodiments in FIG. 3 to FIG. 6 through a logic circuit or by executing code instructions.

An embodiment of this application further provides a computer-readable storage medium. The storage medium stores a computer program or instructions. When the computer program or the instructions are executed by a computer, the method in any one of the embodiments in FIG. 3 to FIG. 6 is implemented.

An embodiment of this application further provides a computer program product. When a computer reads and executes the computer program product, the computer is enabled to perform the method in any one of the embodiments in FIG. 3 to FIG. 6.

The foregoing units described as separate parts may or may not be physically separate, and parts displayed as units may or may not be physical units, may be located in one position, or may be distributed on a plurality of network units. Some or all of the units may be selected based on an actual requirement, to achieve the objectives of the solutions in embodiments of this application. In addition, the network element units in embodiments of this application may be integrated into one processing unit, or each of the units may exist alone physically, or two or more units are integrated into one unit. The integrated unit may be implemented in a form of hardware, or may be implemented in a form of a software network element unit.

When the integrated unit is implemented in the form of a software network element unit and sold or used as an independent product, the integrated unit may be stored in a computer-readable storage medium. Based on such an understanding, an essentially contributing part in the technical solutions of this application, or all or some of the technical solutions may be embodied in a form of a software product. The computer software product is stored in a storage medium and includes several instructions for instructing a computer device (which may be a personal computer, a terminal device, a cloud server, a network device, or the like) to perform all or some of the steps of the method in embodiments of this application. The foregoing storage medium includes any medium that can store program code, such as a USB flash drive, a removable hard disk, a read-only memory (ROM, Read-Only Memory), a random access memory (RAM, Random Access Memory), a magnetic disk, or an optical disc. The foregoing descriptions are merely specific embodiments of this application, but are not intended to limit the protection scope of this application. Any modification or replacement readily figured out by a person skilled in the art within the technical scope disclosed in this application shall fall within the protection scope of this application. Therefore, the protection scope of this application shall be subject to the protection scope of the claims.

## Claims

1. A communication method, wherein the method is applied to a first terminal device, and comprises:
performing listen before talk LBT on a first resource, wherein the first resource is any resource in all resources on a first unicast connection, and the first unicast connection is a unicast connection on a sidelink SL between the first terminal device and a second terminal device; and
when satisfying a first condition, determining that a radio link failure RLF occurs on the first unicast connection, wherein
the first condition comprises that consistent LBT failures occur on all the resources on the first unicast connection.

2. The method according to claim 1, wherein the first resource comprises at least one of the following: a carrier, a bandwidth part, a resource pool, a resource block set, and a sub-channel.

3. The method according to claim 1 or 2, wherein the satisfying a first condition comprises:
if determining that the consistent LBT failures occur on the first resource, determining whether the consistent LBT failures occur on another resource on the first unicast connection other than the first resource; and
if the consistent LBT failures also occur on the another resource, determining that the RLF occurs on the first unicast connection.

4. The method according to any one of claims 1 to 3, wherein all the resources on the first unicast connection are resources on an unlicensed spectrum.

5. The method according to any one of claims 1 to 4, wherein the method further comprises:
generating, by an access stratum of the first terminal device, first indication information, wherein the first indication information indicates that the first terminal device experiences the consistent LBT failures on the first resource;
sending, by the access stratum of the first terminal device, the first indication information to an upper layer of the first terminal device; and
updating, by the upper layer of the first terminal device, a correspondence between a first identifier and the first resource to a correspondence between the first identifier and a second resource based on the first indication information, and indicating the correspondence between the first identifier and the second resource to the access stratum of the first terminal device; or
switching, by the upper layer of the first terminal device based on the first indication information, a first communication interface associated with the first resource to a second communication interface.

6. The method according to claim 5, wherein the sending, by the access stratum of the first terminal device, the first indication information to an upper layer of the first terminal device comprises:
if the consistent LBT failures occur on all the resources for the first terminal device on the unlicensed spectrum, sending, by the access stratum of the first terminal device, the first indication information to the upper layer of the first terminal device.

7. The method according to claim 6, wherein the first indication information further indicates that the first terminal device cannot use a resource on the unlicensed spectrum to perform communication.

8. A communication method, wherein the method is applied to a first terminal device, and comprises:
performing listen before talk LBT on a first resource, wherein the first resource is used by the first terminal device to perform sidelink SL communication with a second terminal device; and
when consistent LBT failures occur on the first resource, determining that a radio link failure RLF occurs on the first resource.

9. The method according to claim 8, wherein the first resource comprises at least one of the following: a carrier, a bandwidth part, a resource pool, a resource block set, and a sub-channel.

10. The method according to claim 8 or 9, wherein after the determining that a radio link failure RLF occurs on the first resource, the method further comprises:
releasing a first bearer associated with the first resource, wherein
the first bearer comprises at least one of the following: an SL data radio bearer DRB, an SL signaling radio bearer SRB, and an SL radio link control RLC bearer.

11. The method according to any one of claims 8 to 10, wherein after the determining that a radio link failure RLF occurs on the first resource, the method further comprises:
discarding SL configuration information associated with the first resource.

12. The method according to any one of claims 8 to 10, wherein after the determining that a radio link failure RLF occurs on the first resource, the method further comprises:
resetting a medium access control MAC layer entity corresponding to the first resource.

13. A communication method, wherein the method is applied to a first terminal device, and comprises:
generating first indication information, wherein the first indication information indicates that the first terminal device experiences consistent listen before talk LBT failures; and
sending a first message to a second terminal device, wherein the first message comprises the first indication information, and
the first message is a unicast message, a multicast message, or a broadcast message.

14. The method according to claim 13, wherein the first message is a unicast message, and a resource on a unicast connection between the first terminal device and the second terminal device is a resource on an unlicensed spectrum.

15. The method according to claim 13, wherein the first message is a multicast message or a broadcast message, the first message is carried in a first transport block, and the first transport block comprises a destination layer-2 identifier, wherein
the destination layer-2 identifier indicates that the first transport block carries the first message; or
the destination layer-2 identifier indicates a service type of a multicast service, and the first message and the multicast service are multiplexed in the first transport block; or
the destination layer-2 identifier indicates a service type of a broadcast service, and the first message and the broadcast service are multiplexed in the first transport block.

16. The method according to any one of claims 13 to 15, wherein the method further comprises:
receiving second indication information from the second terminal device, wherein the second indication information is used to allow the first terminal device to send, to the second terminal device, indication information indicating that the first terminal device experiences the consistent LBT failures.

17. The method according to claim 16, wherein that the second indication information is used to allow the first terminal device to send, to the second terminal device, indication information indicating that the first terminal device experiences the consistent LBT failures comprises:
the second indication information is used to allow the first terminal device to send, to the second terminal device in a case in which the consistent LBT failures occur on a first resource, the indication information indicating that the first terminal device experiences the consistent LBT failures.

18. The method according to any one of claims 13 to 17, wherein that the first indication information indicates that the first terminal device experiences consistent listen before talk LBT failures comprises:
the first indication information indicates that the first terminal device experiences the consistent LBT failures on a second resource.

19. The method according to claim 18, wherein the second resource comprises at least one of the following: a carrier, a bandwidth part, a resource pool, a resource block set, and a sub-channel.

20. A communication method, wherein the method is applied to a second terminal device, and comprises:
receiving a first message from a first terminal device, wherein the first message comprises first indication information, the first message is a unicast message, a multicast message, or a broadcast message, and the first indication information indicates that the first terminal device experiences consistent listen before talk LBT failures; and
performing resource re-selection based on the first indication information to determine a third resource; or sending the first indication information to a network device, and receiving a third resource from the network device, wherein
the third resource is used by the second terminal device to perform sidelink SL communication.

21. The method according to claim 20, wherein the third resource comprises at least one of the following: a carrier, a bandwidth part, a resource pool, a resource block set, and a sub-channel.

22. The method according to claim 20 or 21, wherein the first message is a unicast message, and a resource on a unicast connection between the first terminal device and the second terminal device is a resource on an unlicensed spectrum.

23. The method according to claim 20 or 21, wherein the first message is a multicast message or a broadcast message, the first message is carried in a first transport block, and the first transport block comprises a destination layer-2 identifier, wherein
the destination layer-2 identifier indicates that the first transport block carries the first message; or
the destination layer-2 identifier indicates a service type of a multicast service, and the first message and the multicast service are multiplexed in the first transport block; or
the destination layer-2 identifier indicates a service type of a broadcast service, and the first message and the broadcast service are multiplexed in the first transport block.

24. The method according to any one of claims 20 to 23, wherein the method further comprises:
receiving, by the first terminal device, second indication information from the second terminal device, wherein the second indication information is used to allow the first terminal device to send, to the second terminal device, indication information indicating that the first terminal device experiences the consistent LBT failures.

25. The method according to claim 24, wherein that the second indication information is used to allow the first terminal device to send, to the second terminal device, indication information indicating that the first terminal device experiences the consistent LBT failures comprises:
the second indication information is used to allow the first terminal device to send, to the second terminal device in a case in which the consistent LBT failures occur on a first resource, the indication information indicating that the first terminal device experiences the consistent LBT failures.

26. The method according to any one of claims 20 to 25, wherein that the first indication information indicates that the first terminal device experiences consistent listen before talk LBT failures comprises:
the first indication information indicates that the first terminal device experiences the consistent LBT failures on a second resource.

27. The method according to claim 26, wherein the method further comprises:
indicating, by a medium access control MAC layer or a radio resource control RRC layer of the second terminal device to a physical PHY layer of the second terminal device, that the first terminal device experiences the consistent LBT failures on the second resource.

28. The method according to any one of claims 20 to 27, wherein the method further comprises:
selecting a sidelink destination address destination based on the first indication information.

29. The method according to claim 28, wherein if an SL grant grant overlaps the second resource, the sidelink destination does not comprise a destination corresponding to the first terminal device.

30. The method according to claim 26, 27, or 29, wherein the second resource comprises at least one of the following: a carrier, a bandwidth part, a resource pool, a resource block set, and a sub-channel.

31. A communication apparatus, wherein the communication apparatus comprises a module configured to perform the method according to any one of claims 1 to 30.

32. A communication apparatus, comprising a processor, wherein the processor is coupled to a memory, and the memory stores a computer program; and the processor is configured to invoke the computer program in the memory, to enable the communication apparatus to perform the method according to any one of claims 1 to 30.

33. A communication apparatus, comprising a processor and an interface circuit, wherein the interface circuit is configured to: receive a signal from a communication apparatus other than the communication apparatus and transmit the signal to the processor, or send a signal from the processor to a communication apparatus other than the communication apparatus; and the processor is configured to implement the method according to any one of claims 1 to 30 by using a logic circuit or by executing code instructions.

34. A computer-readable storage medium, wherein the storage medium stores a computer program or instructions, and when the computer program or the instructions are executed by a computer, the method according to any one of claims 1 to 30 is implemented.

35. A computer program product, wherein when a computer reads and executes the computer program product, the computer is enabled to perform the method according to any one of claims 1 to 30.
